# NEUE EUROPÄISCHE PATENTSCHRIFT

(11) **EP 2 209 653 B2**
(45) Veröffentlichungstag und Bekanntmachung des Hinweises auf die Entscheidung über den Einspruch: **17.03.2021**
(45) Hinweis auf die Patenterteilung: 30.04.2014
(21) Anmeldenummer: 08844396.5
(22) Anmeldetag: 31.10.2008
(51) Int. Cl.: B42D 25/00, B32B 27/06, B32B 38/00, B41M 3/14

(54) **POLYMERSCHICHTVERBUND FÜR EIN SICHERHEITS- UND/ODER WERTDOKUMENT UND VERFAHREN ZU DESSEN HERSTELLUNG**
POLYMER LAYER COMPOSITE FOR A SECURE AND/OR VALUABLE DOCUMENT, AND METHOD FOR THE PRODUCTION THEREOF
COMPOSITE POLYMÈRE STRATIFIÉ POUR DOCUMENT DE SÉCURITÉ ET/OU DE VALEUR ET SON PROCÉDÉ DE FABRICATION

(30) Priorität: 31.10.2007 DE 102007052947; 07.12.2007 DE 102007059747; 29.02.2008 DE 102008012419
(43) Veröffentlichungstag der Anmeldung: 28.07.2010
(73) Patentinhaber: Bundesdruckerei GmbH, 10969 Berlin (DE); Covestro Deutschland AG, 51373 Leverkusen (DE)
(72) Erfinder: MUTH, Oliver, 12277 Berlin (DE); PAESCHKE, Manfred, 16348 Wandlitz OT Basdorf (DE); MATHEA, Arthur, 14199 Berlin (DE); LEOPOLD, André, 10119 Berlin (DE); FISCHER, Jörg, 13053 Berlin (DE); PFLUGHOEFFT, Malte, 13347 Berlin (DE); PUDLEINER, Heinz, 47800 Krefeld (DE)
(74) Vertreter: Patentanwälte Bressel und Partner mbB
(86) Internationale Anmeldenummer: PCT/EP2008/009336
(87) Internationale Veröffentlichungsnummer: WO 2009/056352

(56) Entgegenhaltungen:
- EP-A- 0 086 282
- EP-A- 0 343 310
- EP-A- 0 430 282
- EP-A- 1 640 156
- EP-A1- 0 086 282
- EP-A1- 0 343 310
- EP-A1- 0 916 519
- EP-A1- 1 431 062
- EP-A1- 1 509 404
- EP-A1- 1 640 156
- EP-A2- 0 011 684
- EP-A2- 0 430 282
- EP-A2- 1 355 784
- WO-A-00/15430
- WO-A1-00/15430
- WO-A1-96/00146
- WO-A1-2006/133512
- WO-A2-2004/028825
- AU-A- 8 766 582
- DE-A1- 10 064 616
- DE-A1-102004 008 840
- DE-A1-102004 023 310
- DE-T2- 60 018 222
- GB-A- 2 067 467
- GB-A- 2 067 467
- US-A- 3 755 935
- US-A- 3 755 935
- US-A- 3 758 970
- US-A- 3 758 970
- US-A- 3 827 726
- US-A- 3 827 726
- US-A1- 2002 008 380
- US-A1- 2007 102 920

## Beschreibung

### Gebiet der Erfindung

Die vorliegende Erfindung betrifft einen Polymerschichtverbund für ein Sicherheits- und/oder Wertdokument, ein Verfahren zu dessen Herstellung und ein Sicherheits und/oder Wertdokument, das den erfindungsgemäßen Polymerschichtverbund enthält.

### Stand der Technik und Hintergrund der Erfindung

Kartenförmige Datenträger dienen beispielsweise zur Identifikation von Personen und/oder Gegenständen und/oder zum bargeldlosen Zahlungsverkehr. Sie weisen u.a. visuell erkennbare Merkmale auf, die sie eindeutig einer Person und/oder einem Gegenstand und/oder einem Geld- oder Wertpapierkonto zuordnen und nur dem Eigentümer erlauben, sich auszuweisen bzw. über den Gegenstand bzw. das Konto zu verfügen und Geldtransfers zu veranlassen. Aus diesem Grunde müssen diese Datenträger Sicherheitsmerkmale aufweisen, die es unbefugten Personen praktisch unmöglich machen, die Karten zu fälschen oder zu verfälschen, so dass Missbrauch praktisch unterbunden werden kann. Außerdem soll eine Fälschung somit auch leicht erkennbar sein.

Zur Sicherung gegen Fälschung oder Verfälschung ist für die bekannten kartenförmigen Datenträger bisher eine Vielzahl von unterschiedlichen Sicherheitsmerkmalen vorgeschlagen und auch verwirklicht worden, beispielsweise Guillochen, Wasserzeichen, Prägemarken, Durchlichtpasser, durch Lasergravur hergestellte Passbilder, Hologramme, Kippbilder, Fluoreszenzmarken und diverse andere Merkmale. Diese Merkmale sollen dazu dienen, eine Fälschung zu erschweren oder sogar praktisch unmöglich zu machen. Hierzu soll es äußerst schwierig sein, diese Merkmale zu reproduzieren.

Wesentliche Sicherheitsmerkmale in den kartenförmigen Datenträgern sind personalisierte und/oder individualisierte Merkmale, die in dem Datenträger gespeichert sind. Personalisierte Merkmale sind beispielsweise Passbilder und Daten der Person, der die Karte zugeordnet ist, beispielsweise das Geburtsdatum, die Adresse oder Identifikationsnummer in einem Unternehmen sowie biometrische Daten, wie ein digitalisierter Datensatz von Fingerabdrücken, oder die Größe, Augenfarbe der Person oder deren Zugehörigkeit zu einer Krankenkasse. Individualisierte Merkmale sind Daten, die einer bestimmten Einrichtung, wie beispielsweise einem Kraftfahrzeug, einem Bankkonto oder einem Wertpapier, zugeordnet sind.

Derartige personalisierte und/oder individualisierte Merkmale werden auf den kartenförmigen Datenträgern für die sie benutzende Person individuell aufgebracht. Daher muss das Verfahren zu deren Erzeugung flexibel gestaltet sein. Beispielsweise sind Verfahren und Vorrichtungen zur Aufbringung derartiger Daten auf kartenförmige Datenträger in US 6,022,429 A, US 6,264,296 B1, US 6,685,312 B2, US 6,932,527 B2, US 6,979,141 B1 und US 7,037,013 B2 beschrieben, wobei die personalisierten und/oder individualisierten Merkmale u.a. mittels Tintenstrahldrucktechnik auf die Karten aufgebracht werden können. In einigen der vorgenannten Dokumente wird zudem angegeben, dass diese Daten nach dem Aufbringen mit einer Schutzfolie (Overlayfolie) überzogen werden.

Weiterhin sind die die Karten ausgebenden Unternehmen auch bestrebt, ästhetisch ansprechende Karten zu präsentieren. Hierzu hat es in der Vergangenheit vielfach Versuche gegeben, eine transparente Karte herzustellen, die den Anforderungen gerecht wird.

Beispielsweise ist in EP 1 222 620 B1 eine gegenüber sichtbarem Licht im Wesentlichen transparente Karte angegeben, die mindestens eine transparente oder transluzente Kartenoberfläche aufweist und die ein durch ein Kartenlesegerät erkennbares im Infrarot-Bereich absorbierendes Material, das gegenüber sichtbarem Licht transparent ist, enthält, so dass ein Aktivierungssensor in dem Kartenlesegerät unabhängig davon, welcher Stelle der Sensor der Kartenoberfläche gegenüber steht, aktiviert wird. Die Infrarotmaterialien können beispielsweise mit einem Druckverfahren auf die Kartenoberfläche aufgebracht werden.

Ferner ist in WO 02/45008 A2 eine nicht opake Plastikkarte beschrieben, die ebenso wie im Falle der EP 1 222 620 B1 eine Infrarot absorbierende Schicht enthält. Auch in US 7,070,112 B2 ist eine transparente Karte angegeben.

Zur Kodierung von Daten in einer Karte ist in US-Patent Nr. 3,536,894 angegeben, dass Löcher in eine innere Schicht der Karte eingestanzt werden, durch die Infrarot-Strahlung hindurchtreten kann. Hierzu kann beispielsweise eine zwar für sichtbare Strahlung durchlässige, für Infrarot-Strahlung aber undurchlässige dünne Cellophanfolie verwendet werden. Das Muster der Löcher entspricht einer Information.

In US-Patent Nr. 3,836,754 ist weiterhin eine transluzente Karte beschrieben, die beispielsweise zum Öffnen von Toren verwendet wird. Diese Karte enthält in einer inneren Folie bestimmte Bereiche, in denen die Durchlässigkeit für Licht von der Durchlässigkeit für Licht in einem anderen Bereich verschieden ist. Hierzu können in der inneren Folie Löcher gestanzt sein, oder auf der inneren Folie können dunkle Flecken aus Drucktinte angebracht sein. Die Position der Löcher bzw. Flecke kodiert für eine Information.

Allerdings hat sich für den Fall von Löchern in einer inneren Folie herausgestellt, dass sich diese Löcher in der laminierten Karte auf der Außenseite abbilden, da die Bereiche, in denen sich die Löcher befinden, beim Laminieren einfallen. Dies stellt jedoch einen gravierenden Nachteil für das ästhetische Erscheinungsbild der Karte dar.

In der EP 0 343 310 A1 ist ein Polymerschichtverbund für ein Sicherheits- und/oder Wertdokument gemäß Anspruch 1 offenbart sowie eine Druckfarbe welche eine Bedruckung bis 100 % der Oberfläche ermöglicht. Hierdurch wird ein besonderer Farbeindruck erzielt. Die Farbe weist eine Komponente mit einem Molekulargewicht zwischen 200 und 20.000 auf.

In der EP 0 086 282 A1 ist eine Karte aus PVC offenbart, welche mit einer Vinylfarbe derart bedruckt ist, wobei das Verhältnis von bedruckter zu unbedruckter Oberfläche maximal 50% beträgt.

In der US 3,755,935 ist eine Karte offenbart, welche einen vorzugsweise opaken Kern aufweist, in welchen ein doppelseitiges Foto eingelegt wird. Jeweils ein Foto kann von der einen bzw. anderen Seite der Karte gesehen werden.

In der EP 1 640 156 A1 ist eine Polycarbonat-Mehrschichtfolie offenbart, welche aus außen liegenden Schichten aus Polycarbonat und einer dazwischen liegenden Schicht aus einem anderen Polymer besteht, wobei das weitere Polymer Polyamid oder ein Polyamidblend ist. Der Aufbau von herkömmlichen PC-Karten wird beschrieben durch zwei weiße PC Schichten, welche über und unter einer inneren Lage angeordnet sind.

In der GB 2 067 467 A ist eine Karte offenbart, welche wenigstens eine Anzeigevorrichtung aufweist.

Hochwertige kartenförmige Datenträger bestehen heutzutage insbesondere aus Polycarbonat. Eine Personalisierung und/oder Individualisierung von Karten auf Polycarbonatbasis findet typischerweise durch Lasergravur statt. Dabei wird ein Laserstrahl in das Material fokussiert und über das Material geführt. Der Laserstrahl erzeugt dabei im Inneren durch Pyrolyse Schwärzungen, die je nach Laserintensität und Dauer an den jeweiligen Stellen unterschiedlich intensiv sind. Somit kann ein Bild oder eine andere Graphik oder auch ein Schriftzug oder eine Zahlen- und/oder Buchstabenkombination erzeugt werden. Allerdings ist es mit diesem Verfahren nicht möglich, farbige Bilder oder Graphiken sowie Schrift- oder Zahlensequenzen zu erzeugen, sondern lediglich schwarz/weiße Darstellungen. Allenfalls ist es in gewissem Umfange auch möglich, Grau-Töne / -Stufen zu erzeugen. Daher hat es nicht an weiteren Versuchen gefehlt, farbige Darstellungen mittels Drucktechniken in den Karten herzustellen. Allerdings hat sich dies als problematisch herausgestellt, da die verwendbaren Drucktinten für die Gestaltung der Karten nicht ausreichend geeignet sind. Denn ein auf einer Polymerfolie hergestellter Farbdruck führt bei nachfolgendem Zusammenfügen, beispielsweise Laminieren, dieser Folie mit weiteren Folien bei innen liegendem Druck mitunter dazu, dass der so hergestellte laminierte oder anderweitig zusammengefügte Folienstapel durch Manipulationen in der Lage des Verbundes, in der die Druckschicht angeordnet ist, möglicherweise wieder delaminiert oder gespalten werden kann. Je nach Beschaffenheit der Tinte zeigen sich Inkompatibilitäten, die sich in Form mangelnder Adhäsion bemerkbar machen. Insbesondere Wasserbasierte Tinten können von Lagen (Schichten), die aus unterschiedlichen Polymeren bestehen können, beispielsweise Polyolefinen, Polyestern, Polycarbonaten, einfach abgekratzt werden und somit bereits vor dem Fügen Probleme bereiten. Eine derartige Schwachstelle in dem Sicherheits- und/oder Wertdokument ist jedoch nicht akzeptabel, da dadurch eine Fälschung oder Verfälschung des Dokuments erleichtert wird.

### Technisches Problem der Erfindung

Von daher liegt der vorliegenden Erfindung zunächst das Problem zugrunde, dass ein Schichtverbund mit personalisierten und/oder individualisierten Merkmalen, die drucktechnisch hergestellt worden sind, durch unbefugte Manipulationen möglicherweise delaminiert oder gespalten werden kann, so dass es wünschenswert ist, ein Verfahren zu finden, mit dem dies sicher verhindert wird.

Außerdem hat es in der Vergangenheit nicht an Versuchen gefehlt, Verfahren zu finden, die geeignet sind, neuartige Sicherheitsmerkmale zu schaffen, die in einem Polymerschichtverbund, vor allem auf Polycarbonatbasis, enthalten sind. Daher liegt der vorliegenden Erfindung die weitere Aufgabe zugrunde, neuartige Sicherheitsmerkmale für Sicherheits- und/oder Wertdokumente zu finden, deren Fälschung oder Verfälschung praktisch ausgeschlossen ist.

### Kurze Beschreibung der Erfindung

Soweit in der Erfindungsbeschreibung und in den Ansprüchen der Begriff "Muster" verwendet wird, ist darunter eine auf irgendeine Art und Weise strukturierte Druckwiedergabe zu verstehen, die eine personalisierte und/oder individualisierte Information oder auch eine nicht personalisierte und/oder nicht individualisierte Information darstellt. Als strukturierte Druckwiedergabe einer nicht personalisierten und/oder nicht individualisierten Information kommen u.a. regelmäßige Muster, beispielsweise eine Hintergrundrasterung, Guillochen, oder auch Zeichen, insbesondere alphanumerische Zeichen, oder auch ein eindimensionaler oder zweidimensionaler Barcode oder ein Emblem, Logo, Wappen, Hoheitszeichen oder Siegel in Betracht.

Soweit in der Erfindungsbeschreibung und in den Ansprüchen der Begriff "personalisiert" verwendet wird, ist darunter eine Information zu verstehen, die sich auf eine Person bezieht, etwa den Besitzer des Datenträgers. Dieser Begriff soll der Vereinfachung halber nachfolgend und in den Ansprüchen jedoch auch den Begriff "individualisiert" einschließen. Letzterer bezieht sich auf Informationen, die einer bestimmten Einrichtung, wie beispielsweise einem Kraftfahrzeug, einem Bankkonto oder einem Wertpapier, zugeordnet sind.

Soweit in der Erfindungsbeschreibung und in den Ansprüchen der Begriff "flächiger Druckbereich" verwendet wird, ist darunter ein Oberflächenbereich auf einer Polymerschicht zu verstehen, der von einer Druckschicht bedeckt ist und zwar so, dass die Drucktinte bzw. -farbe ohne darin liegende freie Druckbereiche aufgetragen ist. Dies bedeutet, dass sich, abgesehen von Farbwechseln oder Dichtewechseln beim Druckauftrag, zumindest bei Betrachtung mit bloßem Auge, keine Strukturen in der Druckschicht erkennen lassen. D.h. die Drucktinte bzw. -farbe ist vollflächig auf die Oberfläche aufgedruckt. Bei Rasterdrucktechniken sind die Rasterpunkte an allen Rasterstellen vorhanden.

Soweit in der Beschreibung und in den Ansprüchen der Begriff "digitales Druckverfahren" verwendet wird, ist darunter ein Druckverfahren zu verstehen, bei dem die zur Bilderzeugung erforderlichen Daten digital erstellt und zum Drucken unmittelbar, wie beim Tintenstrahl-Druckverfahren, oder mittelbar, wie bei einem xerographischen Druckverfahren, zur Herstellung des Druckbildes verwendet werden, ohne dass eine explizite Druckform benötigt wird. Es handelt sich hierbei um ein Non-Impact-Printing-Verfahren, d.h. ein Verfahren, bei dem keine feste Druckform (ein Druckzylinder oder ein Stempel) verwendet wird.

Soweit in der Beschreibung und in den Ansprüchen der Begriff "absorbierend" verwendet wird, ist darunter die Abschwächung der Transmission von Licht zu verstehen. Eine absorbierende Druckfarbe kann somit auch diffus oder gerichtet reflektierende Eigenschaften aufweisen. Absorbierende Druckfarben umfassen somit farbige absorbierende Druckfarben, weiße streuende Druckfarben und metallische reflektierende Druckfarben.

Zur Erzeugung neuartiger fälschungs- und verfälschungssicherer Sicherheitsmerkmale wird erfindungsgemäß ein Polymerschichtverbund für ein Sicherheits- und/oder Wertdokument, beispielsweise für einen Reisepass, Personalausweis, Führerschein, eine ID-Karte, Kreditkarte, Bankkarte, Barzahlungskarte, Kundenkarte oder Visakarte, vorgeschlagen, der mindestens zwei stoffschlüssig miteinander verbundene Polymerschichten aufweist. Das Format dieser Dokumente ist vorzugsweise ID-1, ID-2 oder ID-3. In dem Verbund befindet sich mindestens eine mit einer im sichtbaren Bereich absorbierenden Druckschicht bedruckte Oberfläche auf einer Polymerschicht des Verbundes. Die absorbierende Druckschicht bildet mindestens einen Druckbereich, wobei alle Druckbereiche auf dieser Oberfläche der Polymerschicht zusammen einen Flächenanteil von mindestens 50 % und höchstens 95 % der Oberfläche haben. Die Bezugsgröße für den Flächenanteil bildet also die gesamte Oberfläche einer Seite einer Polymerschicht. Gemäß den beiden unabhängigen Ansprüchen 1 und 9 sind dabei die mindestens zwei stoffschlüssig miteinander verbundenen Polymerschichten transparent und/oder transluzent, wobei entweder die mindestens eine mit der Druckschicht bedruckte Oberfläche auf der Polymerschicht mindestens einen freien Oberflächenbereich in Form eines Fensters aufweist und in dem mindestens einen freien Oberflächenbereich eine Information gedruck ist, oder die mindestens eine mit der Druckschicht bedruckte Oberfläche auf einer ersten Polymerschicht mindestens einen freien Oberflächenbereich in Form eines Fensters aufweist und auf mindestens einer Oberfläche einer zweiten Polymerschicht eine Information gedruckt ist, sodass die Information durch den mindestens einen freien Oberflächenbereich auf der ersten Polymerschicht sichtbar ist.

Ein derartiger Polymerschichtverbund wird erfindungsgemäß unter Anwendung folgender Verfahrensschritte hergestellt: (a) Bereitstellen von mindestens zwei Polymerschichten; (b) Bedrucken mindestens einer Oberfläche auf einer der Polymerschichten mit mindestens einer im sichtbaren Bereich absorbierenden Druckschicht, wobei die absorbierende Druckschicht mindestens einen Druckbereich bildet, wobei alle Druckbereiche auf dieser Oberfläche der Polymerschicht zusammen einen Flächenanteil von mindestens 50 % und höchstens 95 % haben; und (c) Stapeln und stoffschlüssiges Verbinden der Polymerschichten.

Vorzugsweise bilden die Druckbereiche auf der bedruckten Oberfläche mindestens einen zusammenhängenden flächigen Druckbereich, gegebenenfalls zwei, drei, vier, fünf, sechs oder n zusammenhängende Druckbereiche, wobei n eine ganze Zahl von 7 bis beispielsweise 100 ist.

Ausgangspunkt der vorliegenden Erfindung ist die Erkenntnis, dass neuartige Sicherheitsmerkmale in Sicherheits- und/oder Wertdokumenten erzeugt werden können, wenn eine innen liegende Oberfläche in einem Sicherheits- und/oder Wertdokument mit einem relativ großen Flächenanteil an der Gesamtoberfläche gedruckt wird, ohne dass dieses Dokument delaminiert oder gespalten werden kann. Es hat sich nämlich herausgestellt, dass ein Sicherheits- und/oder Wertdokument, bei dem auf einer innen liegenden Lage eine Druckschicht aufgebracht ist, leicht delaminiert oder gespalten werden kann, weil die Druckschicht wie eine Trennschicht wirkt. Derartige Dokumente können daher auch relativ leicht gefälscht oder verfälscht werden. Insbesondere dann, wenn die Druckschicht mindestens einen zusammenhängenden flächigen Druckbereich bildet, kann dieser Nachteil auftreten. Die Bildung von Mustern durch eine insbesondere zusammenhängende flächige Druckbereiche bildende Druckschicht stellt ein Sicherheitsmerkmal dar. Erfindungsgemäß kann ein Flächenanteil des Druckes von mindestens 50 %, bevorzugt mindestens 60 %, weiter bevorzugt mindestens 65 %, noch weiter bevorzugt mindestens 70 % und am meisten bevorzugt mindestens 75 %, vorgesehen sein.

Um auch von außen, ohne dass das Dokument zerstört wird, erkennen zu können, ob die sich im Verbund befindende opake Oberfläche durch eine Druckschicht gebildet ist und nicht etwa durch eine opake Polymerschicht, ist ein Flächenanteil der bedruckten Oberfläche von höchstens 95 %, vorzugsweise höchstens 90 % und am meisten bevorzugt höchstens 85 %, vorgesehen. Würde nämlich anstelle einer Druckschicht eine opake innen liegende Polymerschicht verwendet, so würden die Außenlagen an den Stellen des Schichtverbundes einfallen, an denen sich diese freien Bereiche, beispielsweise Ausstanzungen in der opaken Lage, befinden. Zwar könnten an den Stellen, an denen sich die freien Bereiche befinden, transparente oder transluzente Materialien eingefügt werden, beispielsweise transparente Folienstücke oder ein transparentes Polymer in flüssiger Form, das beispielsweise beim Laminieren aushärtet. Aber auch in diesem Falle würden sich diese Manipulationen auf der Kartenoberfläche als Unebenheiten zeigen, die durch die inhomogene Materialverteilung in der Umgebung der transparenten Bereiche verursacht würde.

Somit kann durch einen Druck auf einer innen liegenden Oberfläche nach außen erkennbar gemacht werden, dass das Dokument erfindungsgemäß mit einer Drucktechnik hergestellt worden ist. Daher stellt die erfindungsgemäße Gestaltung ein Sicherheitsmerkmal dar.

Somit ergeben sich Bereiche auf der nicht bedruckten Oberfläche, die zusammen einen Flächenanteil auf der Oberfläche von < 50 %, vorzugsweise < 40 %, weiter vorzugsweise < 35 %, noch weiter vorzugsweise < 30 % und am meisten bevorzugt < 25 % haben. Des Weiteren beträgt der Gesamt-Flächenanteil dieser freien Oberflächenbereiche > 5 %, vorzugsweise > 10 % und am meisten bevorzugt > 15 %. Somit kann der Gesamt-Flächenanteil der nicht bedruckten Oberfläche zwischen 5 % und 50 % betragen.

### Detaillierte Beschreibung der Erfindung

Die vorliegende Erfindung betrifft einen Verbund aus Polymerschichten, der gegebenenfalls auch Schichten aus anderen Materialien, beispielsweise aus Pappe, Papier, Textilien, Gewebe, Gewirke, oder so genannte Prepregs zusätzlich enthalten kann, zur Herstellung von Sicherheits- und/oder Wertdokumenten.

Grundsätzlich sind als Werkstoffe für die Polymerschichten alle im Bereich der Sicherheits- und/oder Wertdokumente üblichen Werkstoffe einsetzbar. Diese Schichten sind vorzugsweise 50 - 300 µm dick. Die Polymerschichten können, gleich oder verschieden, auf Basis eines Polymerwerkstoffes aus der Gruppe, umfassend PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid) und Copolymere solcher Polymere, gebildet sein. Des Weiteren können koextrudierte Folien dieser Materialien eingesetzt werden. Bevorzugt ist der Einsatz von PC-Werkstoffen, wobei beispielsweise, aber keinesfalls notwendigerweise, auch sogenannte Nieder-T_{g}-Werkstoffe auf Polycarbonat-Basis einsetzbar sind, insbesondere für eine Polymerschicht, auf welcher eine Druckschicht aufgebracht ist, und/oder für eine Polymerschicht, welche mit einer Polymerschicht, die eine Druckschicht trägt, verbunden ist, und zwar auf der Seite mit der Druckschicht. Nieder-T_{g}-Werkstoffe sind Polymere, deren Glastemperatur unterhalb von 140°C liegt.

Die Polymerschichten können gefüllt oder ungefüllt eingesetzt werden. Die gefüllten Polymerschichten enthalten insbesondere Farbpigmente oder andere Füllstoffe. Die Polymerschichten können auch mit Farbstoffen gefärbt oder farblos sein. Vorzugsweise sind zumindest die Polymerschichten transparent, die sich oberhalb der bedruckten Oberflächen befinden.

Bevorzugt ist es dabei, wenn das Grundpolymer zumindest einer der zu verbindenden Polymerschichten gleiche oder verschiedene miteinander reaktive Gruppen enthält, wobei bei einer Laminiertemperatur von weniger als 200°C reaktive Gruppen einer ersten Polymerschicht miteinander und/oder mit reaktiven Gruppen einer zweiten Polymerschicht reagieren. Dadurch kann die Laminiertemperatur herabgesetzt werden, ohne dass dadurch der innige Verbund der laminierten Schichten gefährdet wird. Dies liegt im Falle verschiedener Polymerschichten mit reaktiven Gruppen daran, dass die verschiedenen Polymerschichten auf Grund der Reaktion der jeweiligen reaktiven Gruppen nicht mehr ohne weiteres delaminiert werden können. Denn zwischen den Polymerschichten findet eine reaktive Kopplung statt, gleichsam ein reaktives Laminieren. Des Weiteren wird ermöglicht, dass wegen der niedrigeren Laminiertemperatur eine Veränderung einer farbigen Druckschicht, insbesondere eine Farbveränderung, verhindert wird. Vorteilhaft ist es dabei, wenn die Glastemperatur T_{g} der zumindest einen Polymerschicht vor der thermischen Laminierung weniger als 120°C (oder auch weniger als 110°C oder weniger als 100°C) beträgt, wobei die Glastemperatur dieser Polymerschicht nach der thermischen Laminierung durch Reaktion reaktiver Gruppen des Grundpolymers der Polymerschicht miteinander um zumindest 5°C, vorzugsweise zumindest 20°C, höher als die Glastemperatur vor der thermischen Laminierung ist. Hierbei erfolgt nicht nur eine reaktive Kopplung der miteinander zu laminierenden Schichten. Vielmehr werden das Molekulargewicht und somit die Glastemperatur durch Vernetzung des Polymers innerhalb der Schicht und zwischen den Schichten erhöht. Dies erschwert ein Delaminieren zusätzlich, da beispielsweise die Drucktinten insbesondere bei einem Manipulationsversuch durch die hohen notwendigen Delaminationstemperaturen irreversibel beschädigt werden und das Dokument dadurch zerstört wird. Vorzugsweise beträgt die Laminiertemperatur beim Einsatz solcher Polymerwerkstoffe weniger als 180°C, besser noch weniger als 150°C. Die Auswahl der geeigneten reaktiven Gruppen ist für einen Fachmann auf dem Gebiet der Polymerchemie ohne Probleme möglich. Beispielhafte reaktive Gruppen sind ausgewählt aus der Gruppe, umfassend -CN, -OCN, -NCO, -NC, -SH, -Sₓ, -Tos, -SCN, -NCS, -H, -Epoxy (-CHOCH₂), -NH₂, -NN⁺, -NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R" eine beliebige reaktive oder nicht-reaktive Gruppe sein kann, beispielsweise H, Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterocyclen mit einem oder mehreren gleichen oder verschiedenen Heteroatomen N, O, oder S. Andere reaktive Gruppen sind selbstverständlich möglich. Hierzu gehören die Reaktionspartner der Diels-Alder Reaktion oder einer Metathese.

Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnden Spacergruppen sind dem Fachmann bekannt und brauchen daher hier nicht weiter beschrieben zu werden. Lediglich beispielhaft seien Spacergruppen genannt, welche ausgewählt sind aus der Gruppe, umfassend -(CH₂)ₙ-, -(CH₂-CH₂-O)ₙ-, -(SiR₂-O)ₙ-, -(C₆H₄)ₙ-, -(C₆H₁₀)ₙ-, -C₁-Cₙ-Alkylen-, -C₃-C₍ₙ₊₃₎-Arylen-, -C₄-C₍ₙ₊₄₎-ArAlkylen-, jeweils verzweigt oder linear, gesättigt oder ungesättigt, optional substituiert, oder korrespondierende Heterocyclen mit einem oder mehreren, gleichen oder verschiedenen Heteroatomen O, N, oder S, wobei n = 1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2006, verwiesen. Der Begriff des Grundpolymers bezeichnet im Rahmen der vorstehenden Ausführungen eine Polymerstruktur, welche keine unter den eingesetzten Laminierbedingungen reaktiven Gruppen trägt. Es kann sich dabei um Homopolymere oder Copolymere handeln. Gegenüber den genannten Polymeren sind auch modifizierte Polymere umfasst.

Die vorliegende Erfindung dient zur Herstellung von Sicherheitsmerkmalen in Sicherheits- und/oder Wertdokumenten. Erfindungsgemäß befinden sich auf der mit der Druckschicht versehenen Oberfläche, auf der der Flächenanteil der Druckschicht von 50 bis 95 % betragen kann, freie Oberflächenbereiche, in denen die Oberfläche nicht bedruckt ist und die in Form von Fenstern gebildet sind. Derartige Fenster können eine beliebige Form aufweisen und beispielsweise rechteckig oder quadratisch sein. Weiterhin kann der Rand der bedruckten Oberfläche auf der Polymerschicht, beispielsweise ein schmaler Rand von wenigen Millimetern Breite, vorzugsweise 0,5 - 5 mm Breite, weiter bevorzugt 1-3 mm Breite, einen freien Oberflächenbereich bilden, in dem die Oberfläche nicht bedruckt ist. Weiterhin können sich auf der bedruckten Oberfläche auf der Polymerschicht freie Oberflächenbereiche befinden, in denen die Oberfläche nicht bedruckt ist und die gemeinsam eine Information bilden, beispielsweise eine personalisierte Information. Ganz besonders bevorzugt kann es sich bei dieser personalisierten Information um ein Passbild handeln. Des Weiteren können sich auf der bedruckten Oberfläche auf der Polymerschicht freie Oberflächenbereiche befinden, in denen die Oberfläche nicht bedruckt ist und die gemeinsam mindestens ein Muster, etwa ein Emblem, Wappen, Hoheitszeichen, Logo oder Siegel, bilden. Somit gibt es eine Vielzahl von möglichen Varianten für die Formgebung der freien Oberflächenbereiche, sofern die oben genannte Flächenanteilsbedingung erfüllt ist. Denkbar sind natürlich auch andere Ausführungsformen, beispielsweise regelmäßige Hintergrundmuster, mit denen die freien Oberflächenbereiche strukturiert sind.

In einer bevorzugten Ausführungsform der Erfindung ist nicht nur eine bedruckte Oberfläche mit dem erfindungsgemäßen Flächenanteil vorgesehen, sondern es sind zwei derartige bedruckte Oberflächen vorgesehen, beispielsweise die beiden Oberflächen einer Polymerschicht. Die beiden Oberflächen können ganz besonders bevorzugt in denselben Oberflächenbereichen bedruckt sein, so dass die Opazität an den bedruckten Stellen höher ist als dann, wenn nur eine Oberfläche bedruckt wäre.

Die bedruckte Oberfläche auf einer Polymerschicht in dem Schichtverbund kann mit verschiedenen anderen Sicherheitsmerkmalen kombiniert werden:
In einer ersten erfindungsgemäßen Ausführungsform der Erfindung befinden sich auf der bedruckten Oberfläche auf der Polymerschicht freie Oberflächenbereiche, in denen die Oberfläche mit Ausnahme von Informationen nicht bedruckt ist. D.h., die Oberfläche wird so bedruckt, dass sich in den freien Oberflächenbereichen Informationen befinden. In den ansonsten unbedruckten Oberflächenbereichen werden somit zusätzlich Informationen gedruckt. Soweit hier ein Flächenanteil der bedruckten Fläche der Oberfläche der Polymerschicht angegeben ist, bezieht sich dieser Flächenanteil auf alle bedruckten Flächenanteile, einschließlich der auf dem Rand oder in anderen freien Oberflächenbereichen gedruckten Informationen.

Ganz besonders bevorzugt ist es, wenn eine der Informationen, die in einem oder mehreren ansonsten freien Oberflächenbereichen gedruckt sind, ein Passbild ist. Anstelle eines Passbildes kann natürlich auch irgendeine andere Information in den Oberflächenbereichen gedruckt sein, beispielsweise eine andere personalisierte Information. Weiter bevorzugt ist es, wenn der Oberflächenbereich in Form eines Fensters gebildet ist und das Fenster die Außenkontur der Informationen, vorzugsweise eines Passbildes, hat. Statt ein Passbild in ein Fenster einzupassen, kann natürlich auch eine andere Information oder ein Muster eingepasst werden, beispielsweise ein Emblem, Wappen, Siegel, Hoheitszeichen, ein Barcode, der personalisierte Information trägt, oder ein Logo, oder auch eine Zeichenfolge, beispielsweise eine alphanumerische Zeichenfolge.

In dieser ersten Ausführungsform befindet sich die Information, die ebenfalls ein Sicherheitsmerkmal darstellt, auf der Oberfläche, die gemäß der erfindungsgemäßen Flächenanteilsbedingung und zwar vorzugsweise zusammenhängend flächig bedruckt ist. Diese Information kann insbesondere in einem Fenster gedruckt sein. Anstelle eines Druckes in einem Fenster kann natürlich auch ein Druck auf dem Rand der Oberfläche, der einen freien Oberflächenbereich bildet, erzeugt werden.

In einer zweiten erfindungsgemäßen Ausführungsform der Erfindung befindet sich die bedruckte Oberfläche auf einer ersten Polymerschicht. Ferner befindet sich auf mindestens einer zweiten und/oder auf weiteren Polymerschichten mindestens eine Information. Diese Information befindet sich auf der zweiten und/oder diesen weiteren Schichten in jeweils einem Oberflächenbereich. Diese Oberflächenbereiche sind zu dem freien Oberflächenbereich auf der bedruckten Oberfläche vorzugsweise passergenau angeordnet, so dass die Information durch den freien Oberflächenbereich auf der ersten Polymerschicht sichtbar ist.

Die Information auf der ersten, der mindestens einen zweiten und/oder den weiteren Polymerschichten kann beispielsweise wiederum eine personalisierte Information sein, beispielsweise ein Passbild. Anstelle eines Passbildes kann natürlich auch ein Muster, beispielsweise ein Hoheitszeichen, vorgesehen sein.

Somit befindet sich die ein weiteres Sicherheitsmerkmal bildende Information in dieser zweiten Ausführungsform auf einer Polymerschicht oder auch auf mehreren Polymerschichten, die von der Polymerschicht verschieden ist/sind, auf der sich die Oberfläche befindet, die der Flächenanteilsbedingung gemäß der Erfindung genügt. Insofern ist diese Ausführungsform von der ersten Ausführungsform verschieden, denn gemäß letzterer Ausführungsform befindet sich die Information nicht auf der bedruckten, sondern auf einer oder mehreren anderen Oberflächen.

In einer besonders bevorzugten Variante der zweiten Ausführungsform kann das Fenster in der Druckschicht auf der bedruckten Oberfläche die Außenkontur des Passbildes haben, das auf der mindestens einen zweiten und/oder auf weiteren Polymerschichten gedruckt ist. Dadurch kann das sich beispielsweise hinter diesem Fenster befindende Passbild durch den exakt angepassten Rahmen des Fensters betrachtet werden.

Alternativ kann eine der Informationen, die sich auf mindestens einer zweiten und/oder auf weiteren Polymerschichten befindet, in Form von Zeichen, insbesondere alphanumerischen Zeichen, oder eines Barcodes vorliegen.

In einer Kombination der ersten und der zweiten bevorzugten Ausführungsform der Erfindung befindet sich die bedruckte Oberfläche, die der Flächenanteilsbedingung gemäß der Erfindung genügt, auf einer ersten Polymerschicht. Ein Passbild oder eine andere personalisierte und nicht personalisierte Information ist in einem Oberflächenbereich auf Oberflächen auf der ersten und einer zweiten und gegebenenfalls zusätzlich auf weiteren Polymerschichten erzeugt. Die das Passbild oder die andere Information enthaltenden Oberflächenbereiche auf der ersten, zweiten und gegebenenfalls weiteren Polymerschichten sind zu dem freien Oberflächenbereich auf der bedruckten Oberfläche passergenau angeordnet. Somit kann die Information, beispielsweise das Passbild, sowohl auf derselben Polymerschicht angeordnet sein wie die Druckschicht mit dem hohen Flächenanteil als auch auf weiteren, vorzugsweise benachbarten, Polymerschichten.

Die Auftrennung der Information auf mehrere Oberflächen auf verschiedenen Polymerschichten kann beispielsweise durch die Bildung verschiedener Farbauszüge oder auch unterschiedlicher Anteile der Information auf die verschiedenen Oberflächen realisiert werden. Beispielsweise kann ein Passbild in mehrere Teilbilder zerlegt werden, die Ebenen einer dreidimensionalen Darstellung des Ursprungsbildes entsprechen. Diese Teilbilder werden dann in den unterschiedlichen Ebenen abgebildet und erzeugen auf diese Weise einen plastischen Eindruck des Bildes.

Falls die Information, beispielsweise eine personalisierte Information, insbesondere ein Passbild, aus einer farbigen Darstellung besteht, können Farbauszüge der Information erzeugt werden. Diese Farbauszüge werden dann auf verschiedenen Polymerschichten passergenau zueinander gedruckt. Derartige Farbauszüge sind bekannt und richten sich nach den bekannten Farbschemata, beispielsweise nach dem CMYK- und dem RGB-Farbraum. Die einzelnen Farbauszüge können, wie zuvor angegeben, auf unterschiedliche Oberflächen im Schichtverbund gedruckt werden. Vorzugsweise werden diese Farbauszüge in einer Art und Weise auf die Oberflächen gedruckt, dass sie beim Zusammenfügen und Verbinden der Polymerlagen passergenau zueinander liegen.

Zur weiteren Einführung eines Sicherheitsmerkmals kann dann, wenn die Information, beispielsweise das Passbild, einen Schwarzanteil im Farbauszug aufweist, dieser Schwarzanteil nicht durch einen Druck sondern vielmehr durch Lasergravur hergestellt werden oder auch durch eine Kombination von Druck und Lasergravur. In letzterem Falle werden die grauen und schwarzen Bildpunkte der graphischen Gestaltung des Passbildes oder der anderen Information nachgearbeitet. Durch den Schwarzanteil wird eine ästhetisch ansprechendere Darstellung erreicht. Durch die Lasergravur wird eine Fälschung oder Verfälschung wesentlich erschwert oder sogar unmöglich gemacht. Bei der Lasergravur enthält mindestens eine der Polymerschichten, auf der der Schwarzanteil gebildet werden soll, Laserinitiatoren. Der Schwarzanteil wird dann in diesen Polymerschichten mit einem Graustufenlaser gebildet. Hierzu wird ein Laserstrahl mit geeigneter Wellenlänge und Intensität auf die Bereiche auf dem Dokument gerichtet, in denen die Schwarzanteile gebildet werden sollen. Dadurch wird eine Pyrolyse des Polymermaterials herbeigeführt, die zu der gewünschten Schwärzung führt. Die zur Schwärzung führende Materialveränderung kann sowohl innerhalb der Druckschicht (d.h. innerhalb von Druckpixeln) als auch über oder unter der Druckschicht im polymeren Material herbeigeführt werden. Als Laser wird hierzu vorzugsweise ein Nd:YAG-Laser (1064 nm) verwendet, der die Grau- bzw. Schwarzwerte der graphischen Gestaltung (des Passbildes) erzeugt oder nacharbeitet. Grundsätzlich kann für die Lasergravur jede geeignete Strahlungsquelle mit einer Wellenlänge im Bereich von 150-10600 nm, insbesondere 150-1100 nm, eingesetzt werden. Alternative Strahlungsquellen zu einem Nd:YAG-Laser sind beispielsweise CO₂-Laser und gepulste UV-Laser (Excimer-Laser). Die Energiedichte liegt im Allgemeinen in einem Bereich von 0,3 mJ/cm² - 50 J/cm², insbesondere in einem Bereich von 0,3 mJ/cm² - 10 J/cm².

Die lasersensitive Komponente (Laserinitiatoren) ist vorzugsweise ein Polymer, das durch Lasereinwirkung lokal pyrolysiert wird. Die betreffende Polymerschicht kann aus einem solchen Polymer bestehen, und/oder die lasersensitive Komponente kann ein lasersensitives Pigment sein, das in der Polymerschicht verteilt ist. Lasersensitive Pigmente können beispielsweise aus organischen Polymeren gebildet sein, welche eine hohe Absorption der Laserstrahlung aufweisen. Derartige Materialien sind auf dem Gebiet bekannt.

In einer bevorzugten Variante dieser Ausführungsform wird das Passbild auf einer äußeren Oberfläche des Polymerschichtverbundes angebracht, so dass es nach dem Laminieren des Verbundes mit einer Overlayfolie im Verbund innen liegt. In diesem Falle kann das Passbild auf einer transluzenten Folie angeordnet sein, die die Laserinitiatoren zur Bildung oder Verstärkung des Schwarzanteiles des Passbildes enthalten kann. Die Overlayfolie ist vorzugsweise transparent. Unterschiedliche Farbauszüge des Passbildes können beispielsweise sowohl auf einer äußeren Oberfläche des Polymerschichtverbundes als auch auf der Innenseite der Overlayfolie oder nur auf der äußeren Oberfläche des Verbundes oder nur auf der Innenseite der Overlayfolie angeordnet sein. Weitere Farbauszüge können auch auf im Verbund weiter innen liegenden Oberflächen gedruckt sein.

In einer dritten bevorzugten Ausführungsform der Erfindung befinden sich auf der bedruckten Oberfläche auf einer ersten Polymerschicht mindestens ein freier Oberflächenbereich, der in Form eines Fensters gebildet ist, und auf der ersten Polymerschicht oder auf einer zweiten Polymerschicht in einem Oberflächenbereich, der zu dem Fenster auf der ersten Polymerschicht passergenau angeordnet ist, ein Anzeigeelement, beispielsweise ein LCD-Display. In dieser Ausführungsform kann eine elektronische Schaltung, die zur Ansteuerung des Anzeigeelements dient, unter einer zusammenhängend flächigen Druckschicht verborgen werden. Damit diese Schaltung auch von der Rückseite der Karte aus nicht sichtbar ist, kann eine dritte Oberfläche, etwa die Rückseite der zweiten Polymerschicht oder eine Oberfläche auf einer dritten Polymerschicht auf der von der ersten Polymerschicht abgewandten Seite der zweiten Polymerschicht, vollflächig mit einer opaken Farbe bedruckt sein, oder die zweite Polymerschicht oder die dritte Polymerschicht ist selbst opak.

Grundsätzlich kann für derartige Konstruktionen des Sicherheits- und/oder Wertdokuments ein Polymerschichtverbund vorgesehen werden, der mindestens zwei Polymerschichten mit bedruckten Oberflächen enthält, auf denen zusammenhängende flächige Druckbereiche gebildet sind, die jeweils mindestens 50 % der bedruckten Oberfläche bedecken. In diesem Falle kann nämlich zwischen den beiden Oberflächen eine elektrische Schaltung vorgesehen sein, die beispielsweise mindestens einen Computerchip sowie eine Antennenschaltung (eingebettet oder einlaminiert) umfasst. Derartige elektrische Schaltungen sind für die berührungslose Übertragung von Information von und zu dem Chip im Bereich der Radiofrequenz geeignet (RFID). Für derartige Anwendungen ist normalerweise kein Anzeigeelement vorgesehen. Die Datenübertragung von und zu dem Chip dient beispielsweise der Identifikation der Person oder einer Einrichtung oder zum Austausch von Daten. Falls ein Fenster in mindestens einer der Druckschichten auf den Polymerschichten des Verbundes vorgesehen ist, kann dieses beispielsweise zur Aufnahme eines Passbildes oder irgendeiner anderen Information dienen oder lediglich als Sicherheitsmerkmal *per se.*

In einer vierten bevorzugten Ausführungsform der Erfindung befindet sich auf der bedruckten Oberfläche einer ersten Polymerschicht mindestens ein freier Oberflächenbereich, der in Form eines Fensters gebildet ist, und die erste Polymerschicht oder eine zweite Polymerschicht ist zumindest in einem Oberflächenbereich, der zu dem Fenster auf der ersten Polymerschicht passergenau angeordnet ist, als Polarisationsfilter ausgebildet. Derartige Polarisationsfilter sind dem Fachmann bekannt, und die entsprechenden Materialien sind u.a. auch als Folien verfügbar. Sind alle Polymerschichten, die sich in dem fertig laminierten Schichtverbund hinter und vor dem Polarisationsfilter befinden, einschließlich der ersten Polymerschicht, wenn diese nicht den Polarisationsfilter bildet, transparent, so ist ein hinter diesem Fenster angeordneter Gegenstand verfremdet sichtbar. Auch dies stellt ein weiteres Sicherheitsmerkmal dar.

In einer fünften Ausführungsform der Erfindung befinden sich auf der bedruckten Oberfläche einer ersten Polymerschicht ein freier Oberflächenbereich, der in Form eines Fensters ausgebildet ist, und auf einer zweiten Polymerschicht auf der einen Seite der ersten Polymerschicht im Schichtverbund ein erstes Teilbild und auf einer dritten Polymerschicht auf der anderen Seite der ersten Polymerschicht im Schichtverbund ein zweites Teilbild. Diese Teilbilder befinden sich in Oberflächenbereichen, die zu dem Fenster passergenau angeordnet sind, wobei das erste Teilbild und das zweite Teilbild zusammen ein Gesamtbild ergeben. Ein derartiger Durchlichtpasser stellt ebenfalls ein Sicherheitsmerkmal dar. Beispielsweise kann das Gesamtbild ein alphanumerisches Zeichen sein. Der freie Bereich der ersten Polymerschicht ist bevorzugt transluzent ausgebildet. Auf diese Weise ergibt sich ein Durchlichtpasser, der bei einfacher Draufsicht auf das Dokument nur jeweils das Teilsymbol, und nur bei Betrachtung im Gegenlicht das Gesamtsymbol zeigt.

Weiterhin ist es natürlich möglich, das transluzente Fenster nicht zwischen die beiden Teilbilder zu platzieren. Stattdessen ist es z.B. möglich, ein transparentes Fenster auf einer Seite des Durchlichtpassers zu platzieren, und die beiden Teilbilder des Gesamtbildes befinden sich auf ein und derselben Seite vom Fenster, wiederum getrennt durch eine transluzente Folie. Die Teilbilder können sich auf derselben transluzenten Folie befinden, indem die Vorder- und Rückseite bedruckt wird, oder auf verschiedenen Folien, zum Beispiel ein Teilbild auf der transluzenten, ein anderes auf einer transparenten Folie, oder beide Teilbilder auf jeweils einer transparenten Folie, getrennt durch eine transluzente Folie.

Die Ausbildung eines solchen Durchlichtpassers bietet den Vorteil, dass sich ein solches Element, das immer eine transluzente Folie benötigt, auf einem Dokument mit Inlay, bestehend z.B. aus Chip und Antenne, platzieren lässt. Im Stand der Technik sind diese beiden Eigenschaften nicht miteinander kombinierbar, wenn man den Chip und die Antenne im Durchlicht nicht sichtbar machen möchte. Denn dafür wird eine strikt opake Schicht benötigt, die das Inlay bildet oder es bedeckt. Ein wie oben beschriebener Durchsichtspasser kann also so gebildet werden, dass eine transparente oder transluzente Folie opak bedruckt wird und die transluzente Folie an einer Stelle gebildet wird, an der sich weder Chip noch Antenne befinden.

Somit kann auch vorgesehen sein, dass sich auf der bedruckten Oberfläche einer ersten Polymerschicht ein freier Oberflächenbereich befindet, der in Form eines Fensters ausgebildet ist, und dass sich auf einer ersten Oberfläche im Schichtverbund ein erstes Teilbild und auf einer zweiten Oberfläche im Schichtverbund ein zweites Teilbild in Oberflächenbereichen befinden, die zu dem Fenster passgenau angeordnet sind, wobei das erste Teilbild und das zweite Teilbild zusammen ein Gesamtbild ergeben und wobei sich zwischen der ersten Oberfläche und der zweiten Oberfläche mindestens eine transluzente Polymerschicht befindet.

Es ist natürlich auch möglich, Durchsichtspasser individualisiert und/oder personalisiert zu gestalfen. Eine Ausführungsform besteht darin, dass ein statisches, flächiges, mindestens einfarbiges Muster auf eine Folie gedruckt wird. Dieses Muster wird von zwei transluzenten Folien eingeschlossen. Die Bedruckung kann auf einer Innenseite einer dieser transluzenten Folien erfolgt sein oder auf einer dritten Folie, die sich zwischen diesen beiden Folien befindet. Auf diesen transluzenten Folien, direkt oder in einer Schicht darüber, befindet sich jeweils ein individualisiertes Fenster, der Rest ist opak. Im Durchlicht sieht man den "Durchschnitt", also die gemeinsamen freien Bestandteile des Fensters. Auf diese Weise lassen sich z.B. Initialien einbringen.

Eine weitere Ausführungsform sieht vor, dass das erste Fenster auf der einen Seite aus einer freien, z.B. rechteckigen oder quadratischen Form, sowie daneben einem Buchstaben, der einen Teil der Initialien des Dokumenteninhabers darstellt, besteht. Das zweite Fenster auf der anderen Seite besteht ebenfalls aus einer rechteckigen oder quadratischen Form, sowie daneben einem Buchstaben, der den zweiten Teil der Initialien des Dokumenteninhabers darstellt. Dabei ist das zweite Rechteck/Quadrat im zweiten Fenster so platziert, das es sich über dem Buchstaben des ersten Fensters befindet. Das erste Rechteck/Quadrat im ersten Fenster ist so platziert, dass es sich über dem zweiten Buchstaben der Initialien im zweiten Fenster befindet. Zwischen diesen beiden Fenstern befindet sich mindestens eine transluzente Folie, die zum Beispiel so wie im ersten Fall als Folienverbund (transluzente Folien schließen eine bedruckte Schicht ein) ausgeprägt sein kann. Es ist aber auch möglich, dass nur eine transluzente Folie verwendet wird, die beidseitig mit einem mindestens einfarbigen Muster bedruckt ist, und zwar derart, dass die Bedruckung auf jeder Seite nur dort erfolgt, wo später ein Buchstabenfeld, nicht also das Rechteck/Quadrat, auf dieser Seite vorgesehen ist. Im Falle von "Erika Mustermann" mit den Initialien "EM" würde man also auf einer Seite eine Bedruckung im Feld des "E" vornehmen, auf der anderen Seite im Feld des "M". Durch die darüberliegenden Fenster sieht man in Draufsicht im Dokument von der einen Seite das "E", von der anderen Seite das "M", und erst im Durchlicht erkennt man von einer Seite die Initialien "EM", und von der anderen Seite ebenfalls, nur spiegelverkehrt.

Grundsätzlich ist es in weiteren Ausführungsformen der Erfindung natürlich auch möglich, andere Sicherheitsmerkmale beispielsweise mit einem Fenster zu kombinieren, das auf einer Oberfläche auf einer der Polymerschichten des Verbundes durch ansonsten ganzflächigen Druck auf dieser Oberfläche gebildet wird. Beispielsweise kann ein Hologramm oder ein Kippbild auf der Außenseite des Sicherheits- oder Wertdokuments gebildet werden und auf einer innen liegenden Oberfläche einer Polymerschicht des Verbundes ein Fenster, das zu dem Bereich des Hologramms bzw. Kippbildes passergenau angeordnet ist.

Auf diese Weise gelingt auch eine einfache Individualisierung eines Hologramms. Dazu kann zum Beispiel ein Volumenhologramm als einfaches Hologramm einer Mattscheibe ausgebildet sein, wie es zum Beispiel in EP 0 896 260 A beschrieben ist. Die Einbringung kann zum Beispiel gemäß WO 2005/091085 A erfolgen. Die Individualisierung erfolgt über eine individuelle Bedruckung einer Folie, die sich darüber befindet, und mit einem individuellen Fenster bedruckt ist. Es versteht sich von selbst, dass statt des Hologramms einer Mattscheibe jedes beliebige andere Hologramm, Kinegramm und Zero-Order-Grating verwendbar ist. Generell kann diese Individualisierungsfunktion auch für beliebige andere Sicherheitsmerkmale, wie Lumineszenzen (Fluoreszenz, Phosphoreszenz, Up-Conversion), photochrome Farben, thermochrome Farben und Mikroschriften verwendet werden, d.h. für das ganze Spektrum aus optischen Merkmalen, Strukturmerkmalen oder Substanzmerkmalen, die durch das Fenster detektiert werden, mit dem bloßen Auge, mit maschinellen Hilfsmitteln und bloßem Auge, oder komplett maschinell.

In einer sechsten bevorzugten Ausführungsform der Erfindung sind die Konturen der freien Oberflächenbereiche oder lediglich eines freien Oberflächenbereiches oder lediglich einiger freier Oberflächenbereiche durch eine Mikroschrift gebildet. Somit kann beispielsweise das Fenster gegen den Flächendruck durch eine Mikroschrift abgegrenzt sein. Dadurch wird ein weiteres Sicherheitsmerkmal in das Dokument eingebracht. Zudem wird die Kontur des freien Oberflächenbereichs durch die Mikroschrift unscharf gezeichnet. Dies verleiht der graphischen Darstellung der Karte einen zusätzlichen ästhetischen Reiz.

In einer siebten bevorzugten Ausführungsform der Erfindung kann mindestens ein zusammenhängender flächiger Druckbereich gebildet sein. Zumindest ein Teil des flächigen Druckbereiches kann durch unterschiedlich dichte Druckteilbereiche in Form eines Wasserzeichens ausgebildet sein. Beispielsweise kann mindestens eine Oberfläche auf einer ersten Polymerschicht unter Bildung von mindestens einem Fenster mit der Druckschicht bedruckt werden. Das Wasserzeichen wird in diesem Falle auf einer zweiten Polymerschicht gebildet. Hierzu wird eine Druckschicht in einem Oberflächenbereich auf der zweiten Polymerschicht gebildet, der zu dem Fenster auf der ersten Polymerschicht passergenau angeordnet ist und unterschiedlich dichte Druckteilbereiche in Form eines Wasserzeichens aufweist.

Alternativ kann das Wasserzeichen auch durch zwei bedruckte Oberflächen gebildet werden: Auf den beiden Oberflächen wird jeweils ein flächiger Druckbereich vorgesehen. Der eine der beiden flächigen Druckbereiche weist freie Oberflächenbereiche beispielsweise in Form eines Musters oder auch in Form einer personalisierten Information, beispielsweise eines Passbildes auf, so dass sich durch das Zusammenwirken einer ersten der beiden zusammenhängend flächig bedruckten Oberflächen und der zweiten der beiden bedruckten Oberflächen, die die freien Oberflächenbereiche aufweist, ein Wasserzeichen ergibt. Dieses wird durch die unterschiedliche Gesamtdichte der beiden Druckschichten bei Betrachtung des Dokuments im Gegenlicht erzeugt.

Andere Sicherheitsmerkmale können auch ohne direkten Zusammenhang mit der Gestaltung der bedruckten Oberfläche mit dem erfindungsgemäßen Flächenanteil in den Polymerschichtverbund eingebracht werden, beispielsweise Hologramme, Kippbilder, Guillochen, Durchlichtpasser, Passbilder, Fluoreszenzmarker, Wasserzeichen. Diese weiteren Sicherheitsmerkmale können sich über die gesamte Oberfläche oder über nur einen Teil der Oberfläche erstrecken.

Besonders vorteilhaft ist es, wenn eine, einige oder alle Polymerschichten im Schichtverbund transparent sind. Dies ergibt eine besonders ansprechende ästhetische Erscheinung des Dokuments. Weiterhin wird dadurch auch ermöglicht, dass die Informationen, die beispielsweise in einem Fenster oder auf einem Rand des Dokuments angeordnet sind, sichtbar werden und gegebenenfalls von beiden Seiten des Dokuments sichtbar sind. Alternativ können eine, einige oder alle Polymerschichten im Schichtverbund auch transluzent sein.

Die Druckschichten, die auf einer oder mehreren Oberflächen im Schichtverbund gegebenenfalls auch zusammenhängend flächig gedruckt sind, können beispielsweise mittels einer digitalen Drucktechnik gebildet sein. Dies ist insbesondere dann sinnvoll, wenn personalisierte Daten in dem Dokument gebildet werden sollen, weil derartige Drucktechniken sehr flexibel einsetzbar sind. Besonders bevorzugt ist die Tintenstrahldrucktechnik. Alternativ können auch herkömmliche Drucktechniken verwendet werden, beispielsweise Hochdruck (direkt oder indirekt), Flachdruck (Offsetdruck, Nassdruck, wasserloser Druck), Durchdruck (Siebdruck) sowie insbesondere Stichtiefdruck und Rastertiefdruck. Zur Herstellung personalisierter Informationen ist ebenfalls der Tintenstrahldruck bevorzugt, weil er flexibel einsetzbar ist, beispielsweise mit einer Auflösung von mindestens 300 dpi, wobei mindestens 8, insbesondere 16, weiter bevorzugt 64 und am meisten bevorzugt 256 Graustufen vorgesehen sind, so dass sich eine Photoqualität ergibt.

Die Druckschicht, die auf einer oder mehreren Oberflächen im Schichtverbund gegebenenfalls zusammenhängend flächig gedruckt ist, kann insbesondere weiß sein.

Um eine vollständig opake Druckschicht zu erreichen, die auch bei einer Betrachtung des Dokuments im Gegenlicht kein Licht durchscheinen lässt, kann unterhalb der Druckschicht eine Silberfarbe gedruckt sein. Derartige Silberfarben sind durch einschlägige ISO-Normen spezifiziert. Diese Silberschicht kann ebenso wie die beispielsweise aus weißer Farbe bestehende Druckschicht mit einer digitalen Drucktechnik, beispielsweise der Tintenstrahldrucktechnik, gedruckt sein. Dieser Druck beschränkt sich auf die Druckbereiche (in denen die Druckschicht gebildet ist). Die Silberfarbe erhöht zudem die Absorption von Infrarotstrahlung bzw. von NIR-Strahlung.

Wie zuvor bereits angegeben, ist es vorteilhaft, wenn die jeweiligen Druckschichten in dem Polymerschichtverbund auf innen liegenden Schichten des Verbundes angeordnet sind. In diesem Falle ist eine Fälschung oder Verfälschung von als Sicherheitsmerkmalen dienenden Druckschichten erschwert oder sogar ausgeschlossen.

Allerdings besteht in diesem Falle das eingangs angegebene weitere Problem, dass herkömmliche kartenförmige Datenträger durch Manipulation relativ leicht delaminiert werden können. Das Problem einer Delamination in dem Fall, dass durch drucktechnische Verfahren auf einer ihnen liegenden Schicht des Schichtverbundes ein Sicherheitsmerkmal aufgebracht ist, kann dadurch gelöst werden, dass die Druckschichten Bindemittel enthalten, die zumindest im Wesentlichen aus demselben Polymer bestehen wie das Material der Schichten des Schichtverbundes. In diesem Falle wird die Gefahr von Delaminationen praktisch ausgeschlossen, weil sich beim Laminieren ein monolithischer Verbund der einzelnen Schichten bildet. Besonders bevorzugt ist es, wenn die Druckschichten Bindemittel auf Polycarbonatbasis enthalten, wenn eine, einige oder alle Schichten des Verbundes ebenfalls aus Polycarbonat bestehen. In letzterem Falle werden die Druckschichten auf innen liegenden Schichten des Schichtverbundes gedruckt, wobei insbesondere alle an die Druckschichten angrenzenden Schichten des Schichtverbundes aus Polycarbonat gebildet sind.

Die verwendete Druckfarbe, beispielsweise eine CMY-Druckfarbe, ist vorzugsweise Lösemittelbasiert. Die Farbe löst die Polymerschicht bevorzugt oberflächlich an. Das Lösungsmittel wird nach dem Druck durch einen Trocknungsvorgang entfernt. Die Druckfarbe wird derart vorzugsweise einige µm bis zu 15 µm in die Polymerschicht eingelagert. Weiterhin können nanoskalige Pigmente in Form von Metalloxiden in die Druckschicht eingebaut werden. Dadurch wird eine Volumentrocknung anstelle einer Oberflächentrocknung ermöglicht, wenn mit IR-Strahlung getrocknet wird.

Für den Druck auf Polycarbonat-Verbundschichten sind grundsätzlich alle fachüblichen Tinten einsetzbar. Bevorzugt ist die Verwendung einer Zubereitung, enthaltend: A) 0,1 bis 20 Gew.% eines Bindemittels mit einem Polycarbonatderivat, B) 30 bis 99,9 Gew.% eines vorzugsweise organischen Lösungsmittels oder Lösungsmittelgemischs, C) 0 bis 10 Gew.% eines Farbmittels oder Farbmittelgemischs (Gew.-% bezogen auf dessen Trockenmasse), D) 0 bis 10 Gew.% eines funktionalen Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Drucktinte. Solche Polycarbonatderivate sind hochkompatibel mit Polycarbonatwerkstoffen, insbesondere mit Polycarbonaten auf Basis Bisphenol A, wie beispielsweise Makrofol® Folien. Zudem ist das eingesetzte Polycarbonatderivat hochtemperaturstabil und zeigt keinerlei Verfärbungen bei laminationstypischen Temperaturen bis zu 200°C und mehr, wodurch auch der Einsatz der vorstehend beschriebenen Nieder-T_{g}-Werkstoffe nicht notwendig ist. Im Einzelnen kann das Polycarbonatderivat funktionelle Carbonatstruktureinheiten der Formel (I) enthalten, 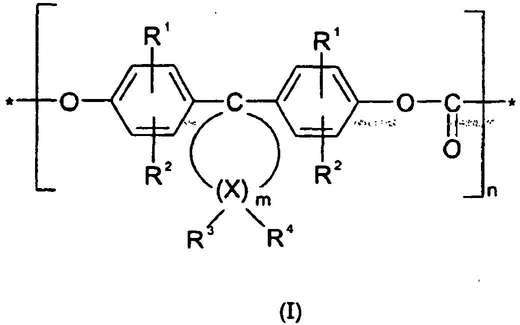 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl, sind; m eine ganze Zahl von 4 bis 7, bevorzugt 4 oder 5 ist; R³ und R⁴ für jedes X individuell wählbar, unabhängig voneinander Wasserstoff oder C₁-C₆-Alkyl ist; X Kohlenstoff und n eine ganze Zahl größer 20 bedeuten, mit der Maßgabe, dass an mindestens einem Atom X, R³ und R⁴ gleichzeitig Alkyl bedeuten. Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in *α*-Stellung zu dem Diphenyl-substituierten C-Atom (C1) können nicht dialkylsubstituiert sein. Die X-Atome in *β*-Stellung zu C1 können mit Alkyl disubstituiert sein. Bevorzugt ist m = 4 oder 5. Das Polycarbonatderivat kann beispielsweise auf Basis von Monomeren, wie 4,4'-(3,3,5-Trimethylcyclohexan-1,1-diyl)diphenol, 4,4'-(3,3-Dimethylcyclohexan-1,1-diyl)diphenol, oder 4,4'-(2,4,4-trimethylcyclopentan-1,1-diyl)diphenol, gebildet sein. Ein solches Polycarbonatderivat kann beispielsweise gemäß der Literaturstelle DE-A 38 32 396 aus Diphenolen der Formel (Ia) hergestellt werden. Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I). 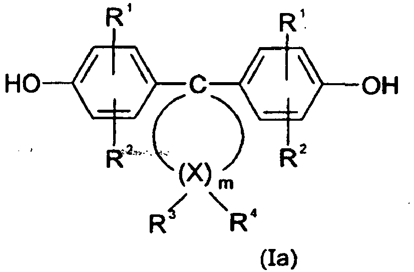 Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann. Beispiele der Diphenole der Formel (Ib) sind Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, *α*,*α*'-Bis-(hydroxyphenyl)-diisopropylbenzole sowie deren kernalkylierte und kernhalogenierte Verbindungen. Diese und weitere geeignete Diphenole sind beispielsweise in US-A 3,028,365, US-A 2,999,835, US-A 3,148,172, US-A 3,275,601, US-A 2,991,273, US-A 3,271,367, US-A 3,062,781, US-A 2,970,131, US-A 2,999,846, DE-A 1 570 703, DE-A 2 063 050, DE-A 2 063 052, DE-A 2 211 956, FR-A 1 561 518 und in H. Schnell in: Chemistry and Physics of Polycarbonates, Interscience Publishers, New York 1964, beschrieben. Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, *α*,*α*-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, *α*,*α*-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan. Besonders bevorzugte Diphenole der Formel (Ib) sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden. Das molare Verhältnis von Diphenolen der Formel (Ia) zu den gegebenenfalls mit zu verwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen. Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein. Die eingesetzten Polycarbonatderivate können in an sich bekannter Weise verzweigt sein. Wenn die Verzweigung gewünscht wird, kann diese in bekannter Weise durch Einkondensieren geringer Mengen, vorzugsweise von Mengen von 0,05 bis 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert-Butylphenole oder andere Alkyl-substituierte Phenole. Zur Regelung des Molekulargewichts sind insbesondere kleine Mengen Phenole der Formel (Ic) geeignet 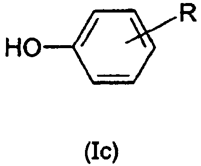 worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Die Polycarbonatderivate können vorzugsweise nach dem Phasengrenzflächenverhalten (vgl. H.Schnell in: *Chemistry and Physics of Polycarbonates,* Polymer Reviews, Vol. IX, Seite 33ff., Interscience Publ. 1964) in an sich bekannter Weise hergestellt werden. Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im Bereich von 0°C bis 40°C. Die gegebenenfalls mit verwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlor-kohlensäureester mit verwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden. Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden. Als organische Phase für die Phasengrenzflächenpolykondensation dienen beispielsweise Methylenchlorid, Chlorbenzol sowie Mischungen aus Methylenchlorid und Chlorbenzol. Als wässrige alkalische Phase dient beispielsweise NaOH-Lösung. Die Herstellung der Polycarbonatderivate nach dem Phasengrenzflächenverfahren kann in üblicher Weise durch Katalysatoren, wie tertiäre Amine, insbesondere tertiäre aliphatische Amine, wie Tributylamin oder Triethylamin, katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden. Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden. Die Polycarbonatderivate können linear oder verzweigt sein, sie sind Homopolycarbonate oder Copolycarbonate auf Basis der Diphenole der Formel (Ia). Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten. Das Polycarbonatderivat kann ein Copolymer sein, enthaltend, insbesondere hieraus bestehend, Monomereinheiten M1 auf Basis der Formel (Ib),vorzugsweise Bisphenol A, sowie Monomereinheiten M2 auf Basis des geminal disubstituierten Dihydroxydiphenylcycloalkans, vorzugsweise des 4,4'-(3,3,5-Trimethylcyclohexan-1,1-diyl)diphenols, wobei das Molverhältnis M2/M1 vorzugsweise größer als 0,3, insbesondere größer als 0,4, beispielsweise größer als 0,5 ist. Bevorzugt ist es, wenn das Polycarbonatderivat ein mittleres Molekulargewicht (Gewichtsmittel) von mindestens 10.000, vorzugsweise von 20.000 bis 300.000, aufweist.

Die Komponente B kann grundsätzlich im Wesentlichen organisch oder wässrig sein. Im Wesentlichen wässrig bedeutet dabei, dass bis zu 20 Gew.% der Komponente B organische Lösungsmittel sein können. Im Wesentlichen organisch bedeutet, dass bis zu 5 Gew.% Wasser in der Komponente B vorliegen können. Vorzugsweise enthält die Komponente B einen bzw. besteht aus einem flüssigen aliphatischen, cycloaliphatischen und/oder aromatischen Kohlenwasserstoff, einem flüssigen organischen Ester und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4-Trimethylbenzol, Cumol und Solvent Naphtha, Toluol, Xylol, (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naphtha, Toluol, Xylol, Essigsäuremethylester, Essigsäureethylester, Methoxypropylacetat. Ethyl-3-ethoxypropionat. Ganz besonders bevorzugt sind Mesitylen (1,3,5-Trimethylbenzol), 1,2,4-Trimethylbenzol, Cumol (2-Phenylpropan), Solvent Naphtha und Ethyl-3-ethoxypropionat. Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt.

Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0,1 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.-%, eines funktionalen Materials oder einer Mischung funktionaler Materialien, E) 0,1 bis 30 Gew.-%, insbesondere 1 bis 20 Gew.-%, Additive und/oder Hilfsstoffe, oder eine Mischung solcher Stoffe.

Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey") wie auch um Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160°C und mehr für einen Zeitraum von mehr als 5 min. stabil, insbesondere farbstabil, ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. Für einen Tintenstrahldruck bedeutet dies in der Praxis, dass die Teilchengröße nicht über 1,0 µm hinausgehen sollte, da sonst Verstopfungen im Druckkopf die Folge sind. In der Regel haben sich nanoskalige Festkörperpigmente und gelöste Farbstoffe bewährt. Die Farbmittel können kationisch, anionisch oder auch neutral sein. Lediglich als Beispiele für im Tintenstrahldruck verwendbare Farbmittel seien genannt: Brillantschwarz C.I. Nr. 28440 (Tetranatrium-4-acetamid-5-hydroxy-6-[7-sulfonat-4-(sulfophenylazo)-1-naphthylazo-]naphthalin-1,7-disulfonat), Chromogenschwarz C.I. Nr. 14645 (3-Hydroxy-4-(1-hydroxy-2-naphthylazo)-7-nitro-1-naphthaliinsulfonsäure Natriumsalz), Direkttiefschwarz E C.I. Nr. 30235 (Dinatrium 4-amino-3-[[4-[(2,4-diaminophenyl)azo][1,1-biphenyl]-4-yl]azo]-5-hydroxy-6-(phenylazo)naphtalin-2,7-disulfonat), Echtschwarzsalz B C.I. Nr. 37245, Echtschwarzsalz K C.I. Nr. 37190, Sudanschwarz HB C.I. 26150 (Diazo-Farbstoff), Naphtholschwarz C.I. Nr. 20470 (Diazo-Farbstoff), Bayscript® Schwarz flüssig (metallisierter Azo-Farbstoff), C.I. Basic Black 11, C.I. Basic Blue 154, Cartasol® Türkis K-ZL flüssig, Cartasol® Türkis K-RL flüssig (C.I. Basic Blue 140), Cartasol Blau K5R flüssig. Geeignet sind des Weiteren z. B. die im Handel erhältlichen Farbstoffe Hostafine® Schwarz TS flüssig (carbon black, vertrieben von Clariant GmbH Deutschland), Bayscript® Schwarz flüssig (C.I.-Gemisch, vertrieben von Bayer AG Deutschland), Cartasol® Schwarz MG flüssig (C.I. Basic Black 11, Eingetragenes Markenzeichen der Clariant GmbH Deutschland), Flexonylschwarz® PR 100 (E C.I. Nr. 30235, Dinatrium 4-amino-3-[[4-[(2,4-diaminophenyl)azo][1,1-biphenyl]-4-yl]azo]-5-hydroxy-6-(phenylazo)naphtalin-2,7-disulfonat, vertrieben von Hoechst AG), Rhodamin B, Cartasol® Orange K3 GL (Azofarbstoff), Cartasol® Gelb K4 GL, Cartasol® K GL (Azofarbstoff), oder Cartasol® Rot K-3B. Des Weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex® erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. das Bindemittel der Druckschicht. Die Farbmittel können entweder direkt als Farbstoff bzw. Pigment zugesetzt werden oder als Paste, einem Gemisch aus Farbstoff und Pigment zusammen mit einem weiteren Bindemittel. Dieses zusätzliche Bindemittel sollte chemisch kompatibel mit den weiteren Komponenten der Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von so genannten Buntpigmenten in den Skalenfarben Cyan-Magenta-Yellow und bevorzugt auch (Ruß)-Schwarz sind Volltonfarbabbildungen möglich.

Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse in: Optical document security, 3rd Ed., Artech House, 2005) gemeint, die zur Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore, aber auch magnetisierbare, photoakustisch adressierbare oder piezoelektrische Materialien. Des Weiteren können Raman-aktive oder Raman-verstärkende Materialien eingesetzt werden, ebenso wie so genannte Barcode-Materialien. Auch hier gelten als bevorzugte Kriterien entweder die Löslichkeit in der Komponente B oder bei pigmentierten Systemen Teilchengrößen < 1 µm sowie eine Temperaturstabilität für Temperaturen > 160°C im Sinne der Ausführungen zur Komponente C. Funktionale Materialien können direkt zugegeben werden oder über eine Paste, d.h. einem Gemisch mit einem weiteren Bindemittel, welches dann Bestandteil der Komponente E bildet, oder dem eingesetzten Bindemittel der Komponente A.

Die Komponente E umfasst bei Tinten für einen Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel® GXL (1,2-Benzisothiazolin-3-on) und Parmetol® A26 (Chlormethyl-/ Methylisothiazolon (CMI/ MI) und N-/ O-Formalen). Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxylierte Diole usw. Beispiele sind die Produktreihen Surfynol® (3,5-Dimethyl 1 hexin-3-ol) und Tergitol® (Nonylphenolethoxylat). Die Menge an Tensiden wird insbesondere bei Anwendung für den Tintenstrahldruck beispielsweise mit der Maßgabe gewählt, dass die Oberflächenspannung der Tinte im Bereich von 10 bis 60 mN/m, vorzugsweise 20 bis 45 mN/m, gemessen bei 25°C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeigneten Polymere in Frage. Beispiele sind wasserlösliche Stärke, insbesondere mit einem mittleren Molekulargewicht von 3.000 bis 7.000, Polyvinylpyrrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic® (Blockcopolymere aus Ethylenoxid und Propylenoxid). Der Anteil an Biozid, bezogen auf die Gesamtmenge an Tinte, kann im Bereich von 0 bis 0,5 Gew.-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Gew.-%, vorzugsweise 0,1 bis 0,5 Gew.-%, betragen. Zu den Hilfsmitteln werden auch sonstige Komponenten gezählt, wie beispielsweise Essigsäure, Ameisensäure oder n-Methyl-Pyrrolidon oder sonstige Polymere aus der eingesetzten Farbstofflösung oder -Paste. Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Das Sicherheits- und/oder Wertdokument wird aus dem erfindungsgemäßen Polymerschichtverbund vorzugsweise durch weiteres Auflaminieren von Overlayfolien (Schutzfolien) gebildet, die vorzugsweise transparent sind. Damit wird ein auf einer oder beiden Außenseiten des Polymerschichtverbundes gebildeter Druck gegen Abrieb und insbesondere Fälschung bzw. Verfälschung geschützt. Auf der Innenseite der Overlayfolien kann zusätzlich ein spiegelbildlicher Druck zu einer Darstellung in dem Polymerschichtverbund angebracht sein und zwar so, dass diese beiden Darstellungen nach dem Auflegen und Verbinden der Overlayfolien auf den Verbund passergenau übereinander liegen. Selbstverständlich kann das Dokument in einem Schritt durch Laminieren aller Folien, die für einen Polymerschichtverbund gemäß der vorliegenden Erfindung benötigt werden, sowie der Overlayfolien gebildet werden, ohne dass zunächst der Polymerschichtverbund hergestellt und dieser dann mit den Overlayfolien laminiert wird.

Insgesamt besteht das Dokument vorzugsweise aus acht oder mehr Lagen. Unter den Overlayfolien ist an der Außenseite des Polymerschichtverbundes in dem Dokument vorzugsweise jeweils eine graphische Gestaltung, beispielsweise mittels einer Drucktechnik, aufgebracht. Die Druckschicht auf der den erfindungsgemäßen Druckbereich aufweisenden Oberfläche ist vorzugsweise weiß, um die graphischen Gestaltungen gut erkennen zu können.

Nachfolgend wird die Erfindung an Hand von Beispielen beschrieben, die nicht beschränkend sind.
- Fig. 1: zeigt eine mit einer Druckschicht bedruckte erste Polymerschicht, in der ein Fenster freigelassen ist, wobei das Fenster zu einem Passbild auf einer zweiten Polymerschicht passergenau angeordnet und eine transparente dritte Polymerschicht vorgesehen ist;
- Fig. 2: zeigt eine erfindungsgemäß mit einer Druckschicht bedruckte Polymerschicht, auf der ein Rand freigelassen ist;
- Fig. 3: zeigt eine erfindungsgemäß mit einer Druckschicht bedruckte Polymerschicht, auf der ein Fenster und ein Rand freigelassen sind und der Rand mit Zeichen bedruckt ist;
- Fig. 4: zeigt einen Ausschnitt aus einer erfindungsgemäß mit einer Druckschicht bedruckten Polymerschicht, auf der ein Fenster freigelassen ist und der Rand des Fensters durch eine Mikroschrift gebildet ist;
- Fig. 5: zeigt einen Stapel von drei Polymerschichten mit einem RFID-Schaltkreis und einem Fenster für ein Passbild;
- Fig. 6: zeigt eine Polymerschicht mit einer zusammenhängend flächigen Druckschicht, in der sich ein freier Oberflächenbereich in Form eines Musters befindet;
- Fig. 7: zeigt eine Polymerschicht mit einer zusammenhängend flächigen Druckschicht, in der sich ein Fenster mit der Außenkontur eines Passbildes befindet, wobei auf der Oberfläche der Polymerschicht außerdem das Passbild gedruckt ist, dessen Außenkontur das Fenster hat;
- Fig. 8: zeigt eine Polymerschicht mit einer zusammenhängend flächigen Druckschicht und mit einem Druckbereich innerhalb der flächigen Druckschicht, in der ein Passbild als so genanntes "Halbton-Fenster" ausgebildet ist.

Gleiche Bezugsziffern in den Figuren bezeichnen jeweils gleiche Elemente.

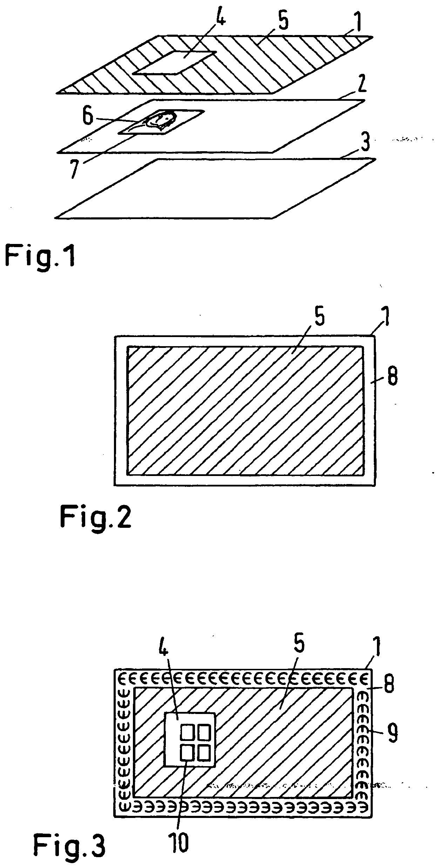

In Fig. 1 ist ein Stapel einer ersten transparenten und aus Polycarbonat bestehenden Polymerschicht 1, einer zweiten ebenfalls transparenten und aus Polycarbonat bestehenden Polymerschicht 2 und einer ebenfalls transparenten und aus Polycarbonat bestehenden dritten Polymerschicht 3 gezeigt. Auf der oberen Oberfläche der ersten Polymerschicht 1 ist eine Druckschicht 5 aus einer weißen Drucktinte mit einem Tintenstrahldruckverfahren aufgebracht. In dieser Druckschicht 5 ist ein Fenster 4 als freier Oberflächenbereich freigelassen, so dass der Flächenanteil der Druckschicht 5 auf der Oberfläche der ersten Polymerschicht 1 etwa 70 % beträgt. Auf der zweiten Polymerschicht 2 ist ein Passbild 6 in einem Oberflächenbereich 7 mit einem Tintenstrahldruckverfahren aufgedruckt, der zu dem Fenster 4 auf der Oberfläche der ersten Polymerschicht 1 passergenau angeordnet ist. Dadurch ist das Passbild 6 nach dem Laminieren der drei Polymerschichten 1, 2, 3 durch das Fenster 4 sichtbar. Das Passbild 6 ist von der Rückseite des Stapels auch durch die transparente dritte Polymerschicht 3 spiegelverkehrt sichtbar.

Die Drucktinten für die zusammenhängend flächige Druckschicht 5 auf der ersten Polymerschicht 1 und für das Passbild 6 auf der zweiten Polymerschicht 2 werden wie folgt hergestellt:

### Beispiel 1: Herstellung von Polycarbonatderivaten für eine Tintenzusammensetzung als Bindemittel

149,0 g (0,65 Mol) Bisphenol A (2,2-Bis-(4-hydroxyphenyl)-propan, 107,9 g (0,35 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann wird eine Lösung von 1,88 g Phenol in 2500 ml Methylenchlorid zugefügt. In die gut gerührte Lösung werden bei pH 13 bis 14 und 21 bis 25°C 198 g (2 Mol) Phosgen eingeleitet. Danach wird 1 ml Ethylpiperidin zugegeben und noch 45 min gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigt eine relative Lösungsviskosität von 1,263. Die Glastemperatur wird zu 183°C bestimmt (DSC).

### Beispiel 2: Herstellung einer für die Herstellung einer Tintenstrahldrucktinte geeigneten flüssigen Zubereitung

Eine flüssige Zubereitung wird aus 17,5 Gew.-Teilen des Polycarbonatderivats aus Beispiel 1 und 82,5 Gew.-Teilen eines Lösungsmittel-Gemisches gemäß Tabelle I hergestellt.

**Tabelle I**

| Stoff | Gew.-% |
|---|---|
| Mesitylen | 2,4 |
| 1-Methoxy-2-propanolacetat | 34,95 |
| 1,2,4-Trimethylbenzol | 10,75 |
| Ethyl-3-ethoxypropionat | 33,35 |
| Cumol | 0,105 |
| Solvent Naphtha | 18,45 |

Es wird eine farblose, hochviskose Lösung mit einer Lösungsviskosität bei Raumtemperatur von 800 mPa.s erhalten.

### Beispiel 3: Herstellung einer erfindungsgemäß eingesetzten Tintenstrahldrucktinte

In einem 50 ml Weithalsgewindeglas werden 10 g Polycarbonatlösung aus Beispiel 2 und 32,5 g des Lösungsmittelgemisches aus Beispiel 2 mit einem Magnetrührer homogenisiert (4 %-ige PC-Lösung). Es wird eine farblose, niederviskose Lösung mit einer Lösungsviskosität bei 20°C von 5,02 mPa.s erhalten.

Die erhaltene Polycarbonat-Lösung wird zusätzlich mit einem weißen Pigment für die zusammenhängend flächige Druckschicht 5 auf der ersten Polymerschicht 1 und mit einem schwarzen Pigment für das Passbild 6 auf der zweiten Polymerschicht 2 versetzt. Durch eine äquivalente Zugabe anderer Pigmente oder Farbstoffe lassen sich entsprechend monochrome und/oder farbige Tinten herstellen.

Eine Änderung der Auflösung des mit der Tinte gedruckten Pixelmusters des Passbildes tritt bei dem Fügevorgang, in dem die mit dem Pixelmuster bedrucke zweite Polymerschicht 2 mit der darüber angeordneten ersten Polymerschicht 1 verbunden wird, nahezu nicht auf. Dieses bedeutet, dass das Pixelmuster auch nach der Lamination in nahezu dergleichen Auflösung erhalten bleibt.

Eine optische Untersuchung des Verbundes ergibt ansonsten keinerlei erkennbare Phasengrenze. Der Verbund zeigt sich als monolithischer Block, der auch Delaminationsversuchen hervorragend widersteht.

In Fig. 2 ist eine aus Polycarbonat bestehende transparente Polymerschicht 1 mit einer zusammenhängend flächigen Druckschicht 5 gezeigt, wobei diese Druckschicht 5 die Oberfläche der Polymerschicht 1 mit Ausnahme eines 3 mm breiten Randes 8 vollflächig bedeckt.

In Fig. 3 ist in einer weiteren Ausführungsform eine erste aus Polycarbonat bestehende transparente Polymerschicht 1 gezeigt, auf deren Oberfläche eine Druckschicht 5 zusammenhängend flächig aufgebracht ist. Die Druckschicht 5 bedeckt die Oberfläche der ersten Polymerschicht 1 mit Ausnahme eines Fensters 4 und eines 7 mm breiten Randes 8 vollständig. In dem Fenster 4 ist ein Anzeigeelement (LCD-Display) 10 sichtbar, das in einer darunter angeordneten, aus Polycarbonat bestehenden zweiten Polymerschicht (nicht dargestellt) eingebettet ist. Die zur Ansteuerung des Anzeigeelements 10 erforderliche elektronische Schaltung ist ebenfalls in diese zweite Polymerschicht eingebettet und wird von der Druckschicht 5 auf der ersten Polymerschicht 1 abgedeckt, so dass sie von dieser Seite nicht sichtbar ist. Die zweite Polymerschicht ist opak, so dass die elektronische Schaltung und die Rückseite des Anzeigeelements 10 auch von der Rückseite des Stapels nicht sichtbar sind. Auf dem nicht bedruckten Rand 8 sind zusätzlich alphanumerische Zeichen, beispielsweise Euro-Symbole aufgedruckt.

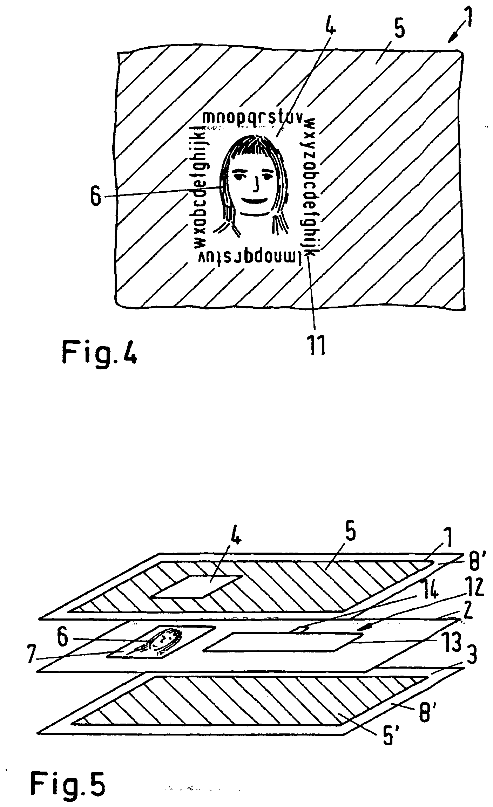

In Fig. 4 ist ein Ausschnitt aus einer erfindungsgemäß mit einer zusammenhängend flächigen Druckschicht 5 bedruckten, aus Polycarbonat bestehenden transparenten Polymerschicht 1 gezeigt. In der Druckschicht 5 ist ein Fenster 4 freigelassen, in dem ein Passbild 6 sichtbar ist. Das Passbild 6 ist ebenso wie die zusammenhängend flächige Druckschicht 5 auf der gezeigten Polymerschicht 1 aufgebracht. Das Fenster 4 ist durch eine Mikroschrift 11 von der zusammenhängend flächigen Druckschicht 5 getrennt und bildet den Rand des Fensters 4. Die Mikroschrift 11 verschmilzt mit der Druckschrift 5.

In Fig. 5 ist in einer weiteren Ausführungsform der Erfindung ein Stapel von drei aus Polycarbonat bestehenden transparenten Polymerschichten, einer ersten Polymerschicht 1, einer zweiten Polymerschicht 2 und einer dritten Polymerschicht 3, gezeigt. Auf der Oberfläche der ersten Polymerschicht 1 ist eine zusammenhängende flächige Druckschicht 5 gedruckt, aus der ein Fenster 4 ausgespart ist und ein Rand 8 unbedruckt bleibt. Auf der Oberfläche der zweiten Polymerschicht 2 ist ein Passbild 6 in einem Oberflächenbereich 7 gedruckt, der zu dem Fenster 4 in der Druckschicht 5 auf der ersten Polymerschicht 1 passergenau angeordnet ist. Dadurch ist das Passbild 6 durch das Fenster 4 sichtbar. Weiterhin ist in die zweite Polymerschicht 2 auch ein RFID-Schaltkreis 12, bestehend aus Computerchip 14 und Antennenschaltkreis 13, eingelassen. Unter der zweiten Polymerschicht 2 befindet sich eine dritte Polymerschicht 3, die ebenso wie die erste Polymerschicht 1 mit einer zusammenhängend flächigen Druckschicht 5' bedruckt ist. Diese Druckschicht 5' bedeckt die Oberfläche der dritten Polymerschicht 3 mit Ausnahme eines Randes 8' vollständig. Dadurch ist die sich auf der zweiten Polymerschicht 2 befindende RFID-Schaltung 12 abgedeckt und daher nicht sichtbar.

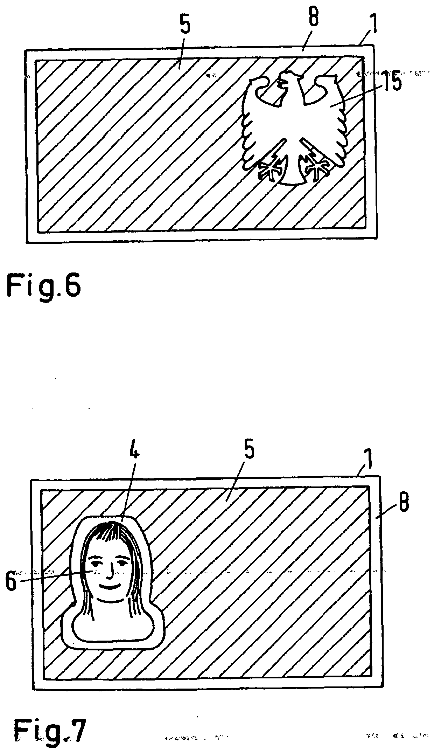

In Fig. 6 ist in einer weiteren Ausführungsform der Erfindung eine Polymerschicht 1 mit einer zusammenhängend flächigen Druckschicht 5 auf einer von deren Oberflächen gezeigt. Diese Druckschicht 5 erstreckt sich allerdings nicht auf einen Rand 8 der Polymerschicht 1. Die Druckschicht 5 bedeckt auch nicht einen freien Oberflächenbereich 15 in Form eines Musters, im vorliegenden Fall des Adlers als Wappen.

In Fig. 7 ist in einer weiteren Ausführungsform der Erfindung eine Polymerschicht 1 mit einer zusammenhängend flächigen Druckschicht 5 auf einer von deren Oberflächen gezeigt. Diese Druckschicht 5 erstreckt sich nicht auf einen Rand 8 der Polymerschicht 1. Außerdem ist ein freier Oberflächenbereich 4 in Form eines Fensters für ein Passbild 6 freigehalten. Das Passbild 6 ist ebenso auf der Oberfläche der Polymerschicht 1 gedruckt. Das Fenster 4 hat die Außenkontur des Passbildes.

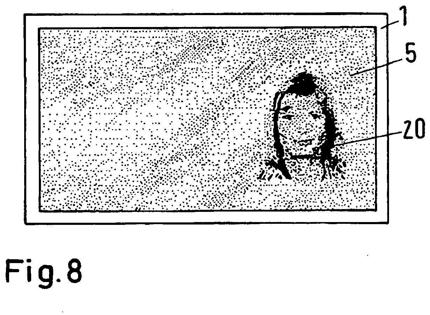

In Fig. 8 ist eine weitere Ausführungsform der Erfindung gezeigt. Eine Polymerschicht 1 weist eine zusammenhängend flächige Druckschicht 5 auf einer von deren Oberflächen auf. Im Unterschied zu den Fig. 6 und 7 ist der freie Oberflächenbereich nicht nur in Form einer strukturierten Aussparung dargestellt, sondern als sogenanntes "Halbton-Fenster" 20. Bei den bisher dargestellten Ausführungsformen ist zwischen bedruckten und unbedruckten Stellen ein rapider Anstieg der Durchlässigkeit bzw. Transparenz zu beobachten. Bei Halbton-Darstellungen ist das Fenster mehr oder weniger transparent und stellt, bei Durchlicht betrachtet, eine Art Wasserzeichen dar (bislang nur aus Papierprodukten bekannt). Wenn man als Halbtondarstellung z.B. ein invertiertes Portrait wählt, so hat man ein kunststoffbasiertes Personaldokument, bei dem ein individualisiertes Halbton-Fenster das Portrait wiedergibt. Aus dem Stand der Technik ist dies nicht bekannt, da es viel zu aufwändig wäre, Folien strukturiert und individualisiert mehr oder weniger transparent darzustellen. In Fig. 8 sind die bedruckten Flächen 5 grau dargestellt und die mehr oder weniger transparenten Teile des Halbtonfensters 16 schwarz.

Es versteht sich, dass die hier beschriebenen Beispiele und Ausführungsformen lediglich zur Veranschaulichung dienen und dass verschiedene Modifikationen und Änderungen der Beispiele und Ausführungsformen sowie Kombinationen von in dieser Anmeldung beschriebenen Merkmalen für einen Fachmann nahe liegend und in den Bereich der nachstehend angegebenen Patentansprüche einbezogen sowie in den Offenbarungsgehalt der vorliegenden Anmeldung aufgenommen sind.

## Patentansprüche

1. Polymerschichtverbund für ein Sicherheits- und/oder Wertdokument, umfassend mindestens zwei stoffschlüssig miteinander verbundene Polymerschichten, wobei sich in dem Verbund mindestens eine mit einer im sichtbaren Bereich absorbierenden Druckschicht bedruckte innenliegende Oberfläche auf einer der mindestens zwei Polymerschichten des Verbundes befindet, die absorbierende Druckschicht mindestens einen Druckbereich bildet und alle Druckbereiche auf der bedruckten Oberfläche der Polymerschicht zusammen einen Flächenanteil von mindestens 50 % und höchstens 95 % haben, **dadurch gekennzeichnet, dass** die mindestens zwei stoffschlüssig miteinander verbundenen Polymerschichten transparent und/oder transluzent sind, wobei
- entweder die mindestens eine mit der Druckschicht bedruckte Oberfläche auf der Polymerschicht mindestens einen freien Oberflächenbereich in Form eines Fensters aufweist und in dem mindestens einen freien Oberflächenbereich eine Information gedruckt ist
- oder die mindestens eine mit der Druckschicht bedruckte Oberfläche auf einer ersten Polymerschicht mindestens einen freien Oberflächenbereich in Form eines Fensters aufweist und auf mindestens einer Oberfläche einer zweiten Polymerschicht eine Information gedruckt ist, sodass die Information durch den mindestens einen freien Oberflächenbereich auf der ersten Polymerschicht sichtbar ist.

2. Polymerschichtverbund für ein Sicherheits- und/oder Wertdokument nach Anspruch 1, **dadurch gekennzeichnet, dass** die Druckbereiche auf der bedruckten Oberfläche mindestens einen zusammenhängenden flächigen Druckbereich bilden.

3. Polymerschichtverbund für ein Sicherheits- und/oder Wertdokument nach einem der vorstehenden Ansprüche, **dadurch gekennzeichnet, dass** eine der Informationen in Form von Zeichen oder eines Barcodes vorliegt.

4. Polymerschichtverbund für ein Sicherheits- und/oder Wertdokument nach einem der vorstehenden Ansprüche, **dadurch gekennzeichnet, dass** sich auf der bedruckten Oberfläche auf der Polymerschicht freie Oberflächenbereiche befinden, in denen die Oberfläche nicht bedruckt ist und die gemeinsam eine Information bilden.

5. Polymerschichtverbund für ein Sicherheits- und/oder Wertdokument nach einem der vorstehenden Ansprüche, **dadurch gekennzeichnet, dass** sich auf der bedruckten Oberfläche auf der Polymerschicht freie Oberflächenbereiche befinden, in denen die Oberfläche mit Ausnahme von Informationen nicht bedruckt ist, dass eine der Informationen in einem Oberflächenbereich ein Passbild ist, dass der Oberflächenbereich in Form eines Fensters gebildet ist und dass das Fenster die Außenkontur des Passbildes hat.

6. Polymerschichtverbund für ein Sicherheits- und/oder Wertdokument nach einem der vorstehenden Ansprüche, **dadurch gekennzeichnet, dass** sich auf der bedruckten Oberfläche auf einer ersten Polymerschicht mindestens ein freier Oberflächenbereich befindet, der in Form eines Fensters gebildet ist, und dass sich auf der ersten oder einer zweiten Polymerschicht in einem Oberflächenbereich, der zu dem Fenster auf der ersten Polymerschicht passergenau angeordnet ist, ein Anzeigeelement befindet.

7. Polymerschichtverbund für ein Sicherheits- und/oder Wertdokument nach einem der vorstehenden Ansprüche, **dadurch gekennzeichnet, dass** mindestens ein zusammenhängender flächiger Druckbereich gebildet ist und dass zumindest ein Teil des flächigen Druckbereiches durch unterschiedlich dichte Druckteilbereiche in Form eines Wasserzeichens ausgebildet ist.

8. Polymerschichtverbund für ein Sicherheits- und/oder Wertdokument nach einem der vorstehenden Ansprüche, **dadurch gekennzeichnet, dass** mindestens zwei flächige Druckbereiche auf verschiedenen bedruckten Oberflächen im Schichtverbund vorgesehen sind und dass der eine flächige Druckbereich freie Oberflächenbereiche aufweist, so dass sich ein Wasserzeichen ergibt.

9. Verfahren zur Herstellung eines Polymerschichtverbundes für ein Sicherheits- und/oder Wertdokument, umfassend mindestens zwei stoffschlüssig miteinander verbundene Polymerschichten, umfassend die Verfahrensschritte: (a) Bereitstellen von mindestens zwei Polymerschichten; (b) Bedrucken mindestens einer Oberfläche auf einer der Polymerschichten mit mindestens einer im sichtbaren Bereich absorbierenden Druckschicht, wobei die absorbierende Druckschicht mindestens einen Druckbereich bildet und alle Druckbereiche auf der bedruckten Oberfläche der Polymerschicht zusammen einen Flächenanteil von mindestens 50 % und höchstens 95 % haben; und (c) Stapeln und stoffschlüssiges Verbinden der Polymerschichten, sodass sich die mindestens eine mit der Druckschicht bedruckte Oberfläche in dem Polymerschichtverbund innenliegend befindet, **dadurch gekennzeichnet, dass** die mindestens zwei stoffschlüssig miteinander verbundenen Polymerschichten transparent und/oder transluzent sind,
- und dass entweder die mindestens eine mit der Druckschicht bedruckte Oberfläche auf der Polymerschicht mindestens einen freien Oberflächenbereich in Form eines Fensters aufweist und in dem mindestens einen freien Oberflächenbereich eine Information gedruckt ist
- oder die mindestens eine mit der Druckschicht bedruckte Oberfläche auf einer ersten Polymerschicht mindestens einen freien Oberflächenbereich in Form eines Fensters aufweist und auf mindestens einer Oberfläche einer zweiten Polymerschicht eine Information gedruckt ist, sodass die Information durch den mindestens einen freien Oberflächenbereich auf der ersten Polymerschicht sichtbar ist.

10. Verfahren zur Herstellung eines Polymerschichtverbundes für ein Sicherheits- und/oder Wertdokument nach Anspruch 9, **dadurch gekennzeichnet, dass** die Druckbereiche auf der bedruckten Oberfläche mindestens einen zusammenhängenden flächigen Druckbereich bilden.

11. Verfahren zur Herstellung eines Polymerschichtverbundes für ein Sicherheits- und/oder Wertdokument nach einem der Ansprüche 9 und 10, **dadurch gekennzeichnet, dass** die mindestens eine Oberfläche so bedruckt wird, dass mindestens ein freier Oberflächenbereich in Form von Bereichen, die gemeinsam eine Information bilden, und/oder in Form von mindestens einem nicht personalisierten Muster und/oder der Rand der Oberfläche auf der Polymerschicht unbedruckt bleibt.

12. Verfahren zur Herstellung eines Polymerschichtverbundes für ein Sicherheits- und/oder Wertdokument nach einem der Ansprüche 9 - 11, **dadurch gekennzeichnet, dass** mindestens eine mit einem Druckbereich versehene Polymerschicht Laserinitiatoren enthält und dass mit einem Graustufenlaser mindestens eine Information in die mindestens eine Polymerschicht eingebracht wird.

13. Verfahren zur Herstellung eines Polymerschichtverbundes für ein Sicherheits- und/oder Wertdokument nach einem der Ansprüche 9 - 12, **dadurch gekennzeichnet, dass** mindestens eine Oberfläche auf einer ersten Polymerschicht unter Bildung von mindestens einem Fenster mit der Druckschicht bedruckt wird und dass auf der ersten Polymerschicht oder einer zweiten Polymerschicht in einem Oberflächenbereich, der zu dem Fenster auf der ersten Polymerschicht passergenau angeordnet ist, ein Anzeigeelement angebracht wird.

14. Verfahren zur Herstellung eines Polymerschichtverbundes für ein Sicherheits- und/oder Wertdokument nach einem der Ansprüche 9 - 13, **dadurch gekennzeichnet, dass** mindestens eine Oberfläche auf einer ersten Polymerschicht unter Bildung von mindestens einem Fenster mit der Druckschicht bedruckt wird und dass auf einer zweiten Polymerschicht eine Druckschicht in einem Oberflächenbereich gebildet wird, der zu dem Fenster passergenau angeordnet ist und unterschiedlich dichte Druckteilbereiche in Form eines Wasserzeichens aufweist.

15. Sicherheits- und/oder Wertdokument, enthaltend einen Polymerschichtverbund nach einem der Ansprüche 1 - 8.

## Claims

1. Polymer layer composite for a security and/or valuable document, comprising at least two polymer layers which are firmly bonded to each other, wherein in the composite at least one internal surface, printed with a printed layer absorbing within the visible range, is located on at least one of the two polymer layers of the composite, the absorbing printed layer forming at least one printed region, and all the printed regions on the printed surface of the polymer layer together having an area percentage of a minimum of 50 % and a maximum of 95 %, **characterized in that** the at least two polymer layers firmly bonded to each other are transparent and/or translucent,
- wherein either the at least one surface on the polymer layer printed with the printed layer has at least one free surface region in the form of a window, and an item of information is printed in the at least one free surface region
- or the at least one surface printed with the printed layer on a first polymer layer has at least one free surface region in the form of a window, and an item of information is printed on at least one surface of a second polymer layer, such that the item of information is visible through the at least one free surface region on the first polymer layer.

2. Polymer layer composite for a security and/or valuable document according to claim 1, **characterized in that** the printed regions on the printed surface form at least one cohesive flat printed region.

3. Polymer layer composite for a security and/or valuable document according to any one of the preceding claims, **characterized in that** one of the items of information is present in the form of characters or a barcode.

4. Polymer layer composite for a security and/or valuable document according to any one of the preceding claims, **characterized in that** there are free surface regions on the printed surface on the polymer layer, in which the surface is not printed and which together form an item of information.

5. Polymer layer composite for a security and/or valuable document according to any one of the preceding claims, **characterized in that** there are free surface regions on the printed surface on the polymer layer, in which, with the exception of items of information, the surface is not printed, that one of the items of information in a surface region is a passport picture, that the surface region is formed in the form of a window, and that the window has the outer contour of the passport picture.

6. Polymer layer composite for a security and/or valuable document according to any one of the preceding claims, **characterized in that** at least one free surface region is present on the printed surface on a first polymer layer, which is formed in the form of a window, and that a display element is located on the first or a second polymer layer in a surface region which is arranged in precise register to the window on the first polymer layer.

7. Polymer layer composite for a security and/or valuable document according to any one of the preceding claims, **characterized in that** at least one cohesive flat printed region is formed, and that at least a part of the flat printed region is formed by printed part regions of differing density, in the form of a watermark.

8. Polymer layer composite for a security and/or valuable document according to any one of the preceding claims, **characterized in that** at least two flat printed regions are provided on different printed surfaces in the layer composite, and that the one flat printed region exhibits free surface regions, such that a watermark is formed.

9. Method for producing a polymer layer composite for a security and/or valuable document, comprising at least two polymer layers which are firmly bonded to each other, comprising the method steps: (a) Provision of at least two polymer layers; (b) Printing of at least one surface on one of the polymer layers with at least one printed layer absorbing in the visible region, wherein the absorbing printed layer forms at least one printed region and all the printed regions on the printed surface of the polymer layer together have an area percentage of a minimum of 50 % and a maximum of 95 %; and (c) Stacking and firmly bonding of the polymer layers, such that the at least one surface on the polymer layer printed with the printed layer is located internally, **characterized in that** the at least two polymer layers firmly bonded to each other are transparent and/or translucent,
- and that either the at least one surface on the polymer layer which is printed with the printed layer has at least one free surface region in the form of a window, and that ab item of information is printed in the at least one free surface region,
- or the at least one surface on a first polymer layer, which is printed with the printed layer, has at least one free surface region in the form of a window, and an item of information is printed on at least one surface of a second polymer layer, such that the item of information is visible through the at least one free surface region on the first polymer layer.

10. Method for producing a polymer layer composite for a security and/or valuable document according to claim 9, **characterized in that** the printed regions on the printed surface form at least one cohesive flat printed region.

11. Method for producing a polymer layer composite for a security and/or valuable document according to any one of claims 9 and 10, **characterized in that** the at least one surface is printed in such a way that at least one free surface region remains unprinted in the form of regions which together form an item of information, and/or in the form of at least one non-personalized pattern, and/or the edge of the surface on the polymer layer remains unprinted.

12. Method for producing a polymer layer composite for a security and/or valuable document according to any one of claims 9 - 11, **characterized in that** at least one polymer layer provided with a printed region contains laser initiators, and that at least one item of information is introduced into the at least one polymer layer with a grey scale laser.

13. Method for producing a polymer layer composite for a security and/or valuable document according to any one of claims 9 - 12, **characterized in that** at least one surface is printed on a first polymer layer with the formation of at least one window with the print layer, and that a display element is applied on the first polymer layer or a second polymer layer in a surface region, which is arranged in precise register to the window on the first polymer layer.

14. Method for producing a polymer layer composite for a security and/or valuable document according to any one of claims 9 - 13, **characterized in that** at least one surface is printed on a first polymer layer with the formation of at least one window with the print layer, and that a printed layer is formed in a surface region on a second polymer layer, which is arranged in precise register to the window and exhibits printed part regions of differing density in the form of a watermark.

15. Security and/or valuable document containing a polymer layer composite according to any one of claims 1 - 8.

## Revendications

1. Composite polymère stratifié pour un document de sécurité et/ou de valeur, comprenant au moins deux couches polymères reliées entre elles par liaison de matière, sachant que dans le composite, au moins une surface interne imprimée d'une couche d'impression à action absorbante dans le domaine visible se trouve sur l'une des au moins deux couches polymères du composite, que la couche d'impression à action absorbante constitue au moins une zone d'impression, et que toutes les zones d'impression sur la surface imprimée de la couche polymère ont en commun une fraction de surface d'au moins 50 % et de maximum 95 %, **caractérisé en ce que** les couches polymères au moins au nombre de deux reliées entre elles par liaison de matière sont transparentes et/ou translucides,
- sachant que soit la surface au moins au nombre de une, imprimée avec la couche d'impression, sur la couche polymère présente au moins une zone de surface libre sous la forme d'une fenêtre et qu'une information est imprimée dans la zone de surface libre au moins au nombre de une,
- soit la surface au moins au nombre de une, imprimée avec la couche d'impression, sur la première couche polymère présente au moins une zone de surface libre sous la forme d'une fenêtre et qu'une information est imprimée sur au moins une surface d'une deuxième couche polymère de sorte que l'information est visible à travers la zone de surface libre au moins au nombre de une sur la première couche polymère.

2. Composite polymère stratifié pour un document de sécurité et/ou de valeur selon la revendication 1, **caractérisé en ce que** les zones d'impression sur la surface imprimée forment au moins une zone d'impression plane continue.

3. Composite polymère stratifié pour un document de sécurité et/ou de valeur selon l'une quelconque des revendications précédentes, **caractérisé en ce qu'**une des informations se présente sous la forme de caractères ou d'un code à barres.

4. Composite polymère stratifié pour un document de sécurité et/ou de valeur selon l'une quelconque des revendications précédentes, **caractérisé en ce que** se trouvent, sur la surface imprimée sur la couche polymère, des zones de surface libres, dans lesquelles la surface n'est pas imprimée et qui forment conjointement une information.

5. Composite polymère stratifié pour un document de sécurité et/ou de valeur selon l'une quelconque des revendications précédentes, **caractérisé en ce que** se trouvent, sur la surface imprimée sur la couche polymère, des zones de surface libres, dans lesquelles la surface n'est pas imprimée à l'exception des informations, **en ce qu'**une des informations est dans une zone de surface une photo d'identité, **en ce que** la zone de surface se présentant sous la forme d'une fenêtre est formée, et **en ce que** la fenêtre présente le contour extérieur de la photo d'identité.

6. Composite polymère stratifié pour un document de sécurité et/ou de valeur selon l'une quelconque des revendications précédentes, **caractérisé en ce que** se trouve, sur la surface imprimée sur une première couche polymère, au moins une zone de surface libre, qui est formée sous la forme d'une fenêtre, et **en ce que** se trouve, sur la première ou une deuxième couche polymère dans une zone de surface, qui est disposée de manière à s'adapter avec précision à la fenêtre sur la première couche polymère, un élément d'affichage.

7. Composite polymère stratifié pour un document de sécurité et/ou de valeur selon l'une quelconque des revendications précédentes, **caractérisé en ce qu'**au moins une zone d'impression plane continue est formée, et **en ce qu'**au moins une partie de la zone d'impression plane est réalisée sous la forme d'un filigrane par des zones partielles d'impression présentant diverses densités.

8. Composite polymère stratifié pour un document de sécurité et/ou de valeur selon l'une quelconque des revendications précédentes, **caractérisé en ce qu'**au moins deux zones d'impression planes sont prévues dans le composé stratifié, sur diverses surfaces imprimées, et **en ce que** une des zones d'impression plane présente des zones de surface libres de manière à obtenir un filigrane.

9. Procédé servant à fabriquer un composite polymère stratifié pour un document de sécurité et/ou de valeur, comprenant au moins deux couches polymères reliées entre elles par liaison de matière, comprenant les étapes de procédé qui suivent consistant à : (a) fournir au moins deux couches polymères ; (b) imprimer au moins une surface sur une des couches polymères avec au moins une couche d'impression à action absorbante dans le domaine visible, sachant que la couche d'impression à action absorbante forme au moins une zone d'impression et que toutes les zones d'impression sur la surface imprimée de la couche polymère présentent conjointement une fraction de surface d'au moins 50 % et de maximum 95 % ; et (c) empiler et relier par liaison de matière les couches polymères, de sort que l'au moins une surface imprimée d'une couche d'impression se trouve dans le composite polymère stratifié **caractérisé en ce que** les couches polymères au moins au nombre de deux reliées entre elles par liaison de matière sont transparentes et/ou translucides,
- et **en ce que** soit la surface au moins au nombre de une, imprimée avec la couche d'impression, sur la couche polymère présente au moins une zone de surface libre sous la forme d'une fenêtre, et qu'une information est imprimée dans la zone de surface libre au moins au nombre de une,
- soit la surface au moins au nombre de une, imprimée avec la couche d'impression, sur la première couche polymère présente au moins une zone de surface libre sous la forme d'une fenêtre et qu'une information est imprimée sur au moins une surface de la deuxième couche polymère de sorte que l'information est visible à travers la zone de surface libre au moins au nombre de une sur la première couche polymère.

10. Procédé servant à fabriquer un composite polymère stratifié pour un document de sécurité et/ou de valeur selon la revendication 9, **caractérisé en ce que** les zones d'impression forment, sur la surface imprimée, au moins une zone d'impression plane continue.

11. Procédé servant à fabriquer un composite polymère stratifié pour un document de sécurité et/ou de valeur selon l'une quelconque des revendications 9 et 10, **caractérisé en ce que** la surface au moins au nombre de une est imprimée de telle manière qu'au moins une zone de surface libre se présentant sous la forme de zones, lesquelles forment conjointement une information, et/ou se présentant sous la forme d'au moins un motif non personnalisé et/ou le bord de la surface sur la couche polymère restent non imprimés.

12. Procédé servant à fabriquer un composite polymère stratifié pour un document de sécurité et/ou de valeur selon l'une quelconque des revendications 9 à 11, **caractérisé en ce qu'**au moins une couche polymère pourvue d'une zone d'impression comporte des initiateurs laser, et **en ce qu'**au moins une information est intégrée dans la couche polymère au moins au nombre de une à l'aide d'un laser à niveaux de gris.

13. Procédé servant à fabriquer un composite polymère stratifié pour un document de sécurité et/ou de valeur selon l'une quelconque des revendications 9 à 12, **caractérisé en ce qu'**au moins une surface sur la première couche polymère est imprimée avec la couche d'impression en formant au moins une fenêtre, et **en ce qu'**un élément d'affichage est placé sur la première couche polymère ou sur une deuxième couche polymère dans une zone de surface, laquelle est disposée de manière à s'adapter avec précision à la fenêtre sur la première couche polymère.

14. Procédé servant à fabriquer un composite polymère stratifié pour un document de sécurité et/ou de valeur selon l'une quelconque des revendications 9 à 13, **caractérisé en ce qu'**au moins une surface sur une première couche polymère est imprimée avec la couche d'impression en formant au moins une fenêtre, et **en ce qu'**une couche d'impression est formée dans une zone de surface sur une deuxième couche polymère, laquelle zone de surface est disposée de manière à s'adapter avec précision à la fenêtre et présente diverses zones partielles d'impression de diverses densités sous la forme d'un filigrane.

15. Document de sécurité et/ou de valeur, contenant un composite polymère stratifié selon l'une quelconque des revendications 1 à 8.
